# EUROPÄISCHE PATENTANMELDUNG

(11) **EP 4 631 604 A1**
(43) Veröffentlichungstag der Anmeldung: **15.10.2025**
(21) Anmeldenummer: 25167871.0
(22) Anmeldetag: 08.12.2012
(51) Int. Cl.: B01D 53/86

(54) **VORRICHTUNG UND VERFAHREN ZUR BESEITIGUNG VON NOX UND N2O**

(30) Priorität: 16.12.2011 DE 102011121188
(62) Teilanmeldung aus: 12819058.4
(71) Anmelder: thyssenkrupp Uhde GmbH, 44141 Dortmund (DE)
(72) Erfinder: Schwefer, Meinhard, 59872 Meschede (DE); Siefert, Rolf, 33378 Rheda-Wiedenbrück (DE); Pinnow, Stefan, 50189 Elsdorf (DE)
(74) Vertreter: thyssenkrupp Intellectual Property GmbH

(57) **Zusammenfassung**

Beschrieben werden eine Vorrichtung und ein Verfahren zur Minderung des Gehalts von NO_{X} und N₂O in Gasen. Die Vorrichtung umfasst:
A) einen Behälter (1) und darin angeordnet
B) zwei hintereinander geschaltete Reaktionsstufen für die Entfernung von NOₓ (DeNO_{X}-Stufe) durch Reduktion von NOₓ mit einem Stickstoff enthaltenden Reduktionsmittel und dazu nachgeschaltet für die Entfernung von N₂O durch katalytische Zersetzung von N₂O in N₂ und O₂ (DeN₂O-Stufe), welche jeweils aus ein oder mehreren Katalysatorbetten (7, 8) bestehen und welche von dem zu reinigenden Gas durchströmt werden, wobei
C) das mindestens eine Katalysatorbett der DeNO_{X}-Stufe (7) einen Katalysator für die Reduktion von NO_{X} mit Stickstoff enthaltenden Reduktionsmitteln enthält, welcher mit Übergangsmetallen, einschließlich der Lanthaniden, dotierte Zeolithe enthält,
D) das zumindestens eine Katalysatorbett der DeN₂O-Stufe (8) einen Katalysator für die Zersetzung von N₂O in N₂ und O₂ enthält, der eine oder mehrere katalytische aktive Verbindungen von Elementen ausgewählt aus den Gruppen 5 bis 11 des Periodensystems der Elemente, ausgenommen mit Eisen dotierte Zeolithe, enthält und
E) vor der DeNO_{X}-Stufe (7) eine Vorrichtung zum Einbringen eines Stickstoff enthaltenden Reduktionsmittels in den Strom des NO_{X} und N₂O enthaltenden Gases vorgesehen ist.

Die erfindungsgemäß verwendete Kombination von Katalysatoren gestattet einen sehr einfachen Aufbau und einen sehr wirtschaftlichen Betrieb des Reaktors.

## Beschreibung

Die Erfindung betrifft eine Vorrichtung sowie ein Verfahren zur katalytischen Beseitigung von NO_{X} und N₂O.

Bei vielen Prozessen, wie z.B. bei Verbrennungsprozessen oder bei der industriellen Herstellung von Salpetersäure oder Caparolactam resultiert ein mit Stickstoffmonoxid NO, Stickstoffdioxid NO₂ (zusammen bezeichnet als NO_{X}) sowie Lachgas N₂O beladenes Abgas. Während NO und NO₂ seit langem als Verbindungen mit ökotoxischer Relevanz bekannt sind (saurer Regen, Smog-Bildung) und weltweit Grenzwerte für deren maximal zulässige Emissionen festgelegt sind, rückte im letzten Jahrzehnt in zunehmendem Maße auch Lachgas in den Fokus des Umweltschutzes, da dieses in nicht unerheblichem Maße zum Abbau von stratosphärischem Ozon und zum Treibhauseffekt beiträgt. Es besteht daher aus Gründen des Umweltschutzes ein dringender Bedarf an technischen Lösungen, die Lachgasemissionen zusammen mit den NO_{X}-Emissionen zu beseitigen.

Zur Beseitigung von N₂O einerseits und NO_{X} andererseits sind bereits zahlreiche Möglichkeiten bekannt.

Bei der NO_{X}-Reduktion ist die selektive katalytische Reduktion (SCR) von NO_{X} mittels Ammoniak in Gegenwart vanadiumhaltiger TiO₂-Katalysatoren hervorzuheben (vgl. etwa G. Ertl, H. Knözinger J. Weitkamp: Handbook of Heterogeneous Catalysis, Vol. 4, Seiten 1633-1668, VCH Weinheim (1997)). Diese kann je nach Katalysator bei Temperaturen von ca. 150 bis ca. 450°C ablaufen und wird im technischen Maßstab bevorzugt zwischen 200 und 400°C, insbesondere zwischen 250 und 350°C betrieben. Sie ist die meist genutzte Variante der NO_{X}-Minderung aus Abgasen industrieller Prozesse und ermöglicht bei entsprechender Dimensionierung der Katalysatorbetten einen NO_{X}-Abbau von mehr als 90%.

Auch auf Basis von Zeolith-Katalysatoren finden sich Verfahren zur Reduktion von NO_{X}, die unter Verwendung verschiedenster Reduktionsmittel ablaufen. Neben Cu-ausgetauschten Zeolithen (vgl. z.B. EP-A-914,866) scheinen vor allem eisenhaltige Zeolithe für praktische Anwendungen von Interesse.

So beschreiben US-A-5,451,387 und EP-A-756,891 Verfahren zur selektiven katalytischen Reduktion von NO_{X} mit NH₃ über eisenausgetauschten Zeolithen, welche bevorzugt bei Temperaturen zwischen 200 und 550°C, insbesondere um 400°C arbeiten.

Im Unterschied zur NO_{X}-Minderung in Abgasen, die seit vielen Jahren in der Technik etabliert ist, existieren zur N₂O-Beseitigung nur vergleichsweise wenige technische Prozesse, die zumeist auf einen thermischen oder katalytischen Abbau des N₂O abzielen. Eine Übersicht über die Katalysatoren, deren prinzipielle Eignung zum Abbau und zur Reduktion von Lachgas nachgewiesen wurde, gibt Kapteijn et al. (Kapteijn F. et al., Appl. Cat. B: Environmental 9 (1996) 25-64). Die katalytische Zersetzung von Lachgas in N₂ und O₂ bietet dabei gegenüber der katalytischen Reduktion mit ausgewählten Reduktionsmitteln, wie NH₃ oder Kohlenwasserstoffen, den Vorteil, dass keine Kosten für den Verbrauch an Reduktionsmitteln anfallen. Allerdings kann eine wirksame N₂O-Minderung auf Basis einer katalytischen Zersetzung, im Gegensatz zur N₂O- oder auch NO_{X}-Reduktion, mit den üblichen Zersetzungskatalysatoren effektiv nur bei Temperaturen größer 400°C, vorzugsweise größer 450°C erreicht werden.

Besonders geeignet zur katalytischen Zersetzung des N₂O in N₂ und O₂ erscheinen wiederum Übergangsmetall-beladene Zeolith-Katalysatoren (US-A-5,171,553).

Als insbesondere vorteilhaft werden Eisen-beladene Zeolith-Katalysatoren beschrieben (z.B. in EP-A-955,080 oder WO-A-99/34,901). Die Aktivität der Fe-Zeolith-Katalysatoren zur N₂O-Zersetzung wird dabei durch gleichzeitige Gegenwart von NO_{X} erheblich gesteigert, wie beispielsweise von Kögel et al. in Catalysis Communications 2 (2001) 273-276 oder von Perez-Ramirez et al. in Journal of Catalysis 208 (2003) 211-223 wissenschaftlich dargelegt wird. Diese Eigenschaft scheint ausschließlich auf mit Eisen dotierten Zeolithe zuzutreffen. Mit anderen Übergangsmetallen wie Kupfer oder Kobalt dotierte Zeolithe zeigen dieses Verhalten nicht.

In vielen Fällen ist die N₂O-Zersetzung durch die Anwesenheit von NO_{X} sogar inhibiert, wie z.B. aus Applied Catalysis B: Environmental 9 (1996) 25-64 [Kap. 5.1], Applied Catalysis B: Environmental 12 (1997) 277-286 sowie aus Catalysis Today 35 (1997) 113-120 bekannt. Dies betrifft beispielsweise Cu-, Co- und Rh-haltige Katalysatoren, die in Abwesenheit von NO_{X} eine sehr hohe Aktivität zur N₂O-Zersetzung zeigen, in Anwesenheit von NO_{X} aber eine deutlich verminderte Aktivität aufweisen. Derartige Katalysatoren werden im Folgenden als "NO_{X}-sensitiv" bezeichnet.

Neben den vorgenannten Katalysatoren und Verfahren zur NO_{X}-Reduktion und zur N₂O-Zersetzung werden auch kombinierte Verfahren zur Beseitigung von NO_{X} und N₂O in der Patentliteratur beschrieben. Dabei handelt es sich zum Beispiel um Verfahren auf Basis einer katalytischen Reduktion des NO_{X} mit NH₃ (in einer DeNO_{X}-Stufe) und einer katalytischen Zersetzung von N₂O in N₂ und O₂ über eisenhaltigen Zeolith-Katalysatoren (in einer DeN₂O-Stufe).

So beschreibt beispielsweise WO-A-01/51,182 ein Verfahren zur Beseitigung von NO_{X} und N₂O aus dem Restgas der Salpetersäureproduktion, wobei das zu reinigende Abgas zunächst durch eine DeNO_{X}-Stufe und sodann durch eine DeN₂O-Stufe mit eisenbeladenen Zeolith-Katalysatoren geleitet wird. In der vorgeschalteten DeNO_{X}-Stufe wird der NO_{X}-Gehalt soweit reduziert, dass ein optimales NO_{X}/N₂O-Verhältnis von 0,001 bis 0,5 eingestellt wird, welches zu einem beschleunigten N₂O-Abbau in der nachgeschalteten DeN₂O-Stufe führt. Einzelheiten zur apparativen Ausgestaltung dieses Verfahrens werden nicht offenbart.

Die in WO-A-01/51,182 beschriebene Reihenfolge der Prozessstufen ist aus verfahrens- bzw. prozesstechnischer Sicht sehr vorteilhaft, da das Verfahren im Restgas der Salpetersäureproduktion, zwischen Absorptionsturm und Restgasturbine in einem aufsteigenden Temperaturprofil angeordnet ist; d.h. das Restgas weist zunächst vor Eintritt in die DeNO_{X}-Stufe eine niedrige Eintrittstemperatur auf, welche <400°C vorzugsweise <350°C beträgt, so dass auch klassische DeNO_{X}-Katalysatoren auf V₂O₅-TiO₂-Basis verwendet werden können. Nach der DeNO_{X}-Stufe vor Eintritt in die DeN₂O-Stufe erfolgt dann eine (einmalige) Aufheizung des Restgases auf 350 bis 500°C, so dass eine effektive katalytische N₂O-Zersetzung möglich ist. Das Abgas wird dann einer Restgasturbine zugeführt, in welcher unter Entspannung und Abkühlung des Abgases eine Rückgewinnung des Wärmeinhalts des Abgases erfolgt.

Auch eine umgekehrte Verschaltung der beiden Verfahrensstufen, d.h. in einer Reihenfolge, in der zunächst der N₂O-Abbau vorgesehen ist und dann der NO_{X}-Abbau erfolgt, ist möglich, wie in WO-A-97/10,042, WO-A-01/51,181, WO-A-03/105,998 und WO-A-2006/119,870 gelehrt wird. In WO-A-01/51,181 wird neben dem Verfahren auch eine Vorrichtung zu dessen Durchführung näher beschrieben. Diese ist durch eine Abfolge von zwei hintereinander geschalteten Katalysatorbetten gekennzeichnet, von denen mindestens eines von dem Gas radial durchströmt wird und wobei sich zwischen den Katalysatorbetten notwendigerweise eine Vorrichtung zur Einbringung eines gasförmigen Reduktionsmittels in den aus dem ersten Katalysatorbett austretenden Gasstrom befindet. Bei diesen Verfahren wird das Abgas üblicherweise bei einer einheitlichen Temperatur von <500°C über zwei eisenbeladene Zeolith-Katalysatoren enthaltende Reaktionszonen geleitet, die räumlich voneinander getrennt oder miteinander verbunden sein können. Dabei erfolgt die N₂O-Zersetzung in der DeN₂O-Stufe zunächst bei ungemindertem NO_{X}-Gehalt, d.h. unter voller Ausnutzung des cokatalytischen NO_{X}-Effekts auf die N₂O-Zersetzung, und sodann nach intermediärer Zugabe von Ammoniak die katalytische NO_{X}-Reduktion. Da die NO_{X}-Reduktion vorzugsweise bei gleicher Temperatur ablaufen soll wie die N₂O-Zersetzung, kommen in der DeNO_{X}-Stufe ebenfalls Fe-Zeolith-Katalysatoren zum Einsatz, welche im Unterschied zu klassischen SCR-Katalysatoren, wie z.B. V₂O₅-TiO₂-basierten Katalysatoren, auch bei höheren Temperaturen >400°C betrieben werden können. Eine intermediäre Abkühlung des Prozessgases ist damit nicht erforderlich.

Schließlich ist aus JP-A-06/126,177 die kombinierte Beseitigung von NO_{X} und N₂O auf Basis einer katalytischen Reduktion des NO_{X} mit NH₃ (in einer DeNO_{X}-Stufe) und einer katalytische Zersetzung von N₂O in N₂ und O₂ (in einer DeN₂O-Stufe) bekannt. Die Abfolge der Stufen kann gemäß dieser Schrift beliebig sein. Für die Zersetzung des N₂O wird ein geträgerter Katalysator vorgeschlagen, der 0,001 bis 2 Gew.-% an metallischem Platin oder Rhodium oder metallisches Rhodium und Kupfer enthält. Neben diesen Metallen werden noch Iridium, Ruthenium, Eisen, Kobalt und Nickel vorgeschlagen. Als Trägermaterialien werden Aluminiumoxid, Siliziumdioxid und Zirkoniumdioxid sowie Zeolithe genannt. Einzelheiten zur Auswahl der Katalysatoren für die Reduktion des NO_{X} werden hier nicht offenbart.

Auch die parallel ablaufende chemische Reduktion von NO_{X} und N₂O ist bereits beschrieben worden. Dabei ist bekannt, dass die NO_{X} Reduktion erheblich schneller abläuft als die N₂O Reduktion. Bei diesen Reduktionsverfahren wird für die NO_{X}-Reduktion üblicherweise ein Stickstoff enthaltendes reduzierendes Gas, beispielsweise Ammoniak, eingesetzt, während für die N₂O-Reduktion üblicherweise das gleiche reduzierende Gas, wie Ammoniak, aber auch Wasserstoff, ein Kohlenwasserstoff oder Kohlenmonoxid eingesetzt werden. Beispiele für solche Verfahren finden sich in WO-A-03/84,646 und in US-A-4,571,326. Das Verfahren nach US-A-4,571,326 kann auch in einem oder in einer Abfolge mehrerer Katalysatorbetten durchgeführt werden. Aufgrund der rascheren Reduktion des NO_{X} bilden sich bei Einsatz eines Katalysatorbettes zwei Zonen aus, wobei in der ersten Zone hauptsächlich NO_{X} reduziert wird und in der nachfolgenden und unmittelbar sich daran anschließenden Zone hauptsächlich N₂O reduziert wird. Diese Variante ist z.B. in Figur 4 von US-A-4,571,329 dargestellt. In Figur 5 von US-A-4,571,329 wird eine Abfolge von zwei Katalysatorbetten dargestellt; diese grenzen unmittelbar aneinander und bilden eine Zone, in der hauptsächlich NO_{X} reduziert wird, gefolgt von einer Zone, in der hauptsächlich N₂O reduziert wird. Als Katalysatoren für die N₂O-Reduktion werden ausgewählte mit Eisen oder Wasserstoff dotierte Zeolithe eingesetzt.

In US-A-2002/0127163 wird ein Verfahren zur selektiven katalytischen Reduktion von N₂O mit Ammoniak beschrieben. Als Katalysatoren werden Zeolithe eingesetzt, die bevorzugt mit Metallen dotiert sind. Dieses Reduktionsverfahren kann mit einer NO_{X}-Reduktion kombiniert werden. In Figur 10 dieses Dokumentes wird dargelegt, dass derartige Verfahren in einem, oder in einer Abfolge mehrerer Katalysatorbetten durchgeführt werden können. Danach können sowohl eine gleichzeitige Reduktion von NO_{X} und N₂O oder auch eine erste Reduktion von N₂O gefolgt von einer Reduktion des NO_{X} durchgeführt werden. Zur katalytischen Reduktion von N₂O wird eine Mindestmenge von 0,5 mol Ammoniak per mol N₂O benötigt. Nach der Beschreibung wird die Abfolge der Reduktionsstufen durch die Auswahl der Katalysatoren kontrolliert. Eine katalytische Zersetzung des N₂O in Stickstoff und Sauerstoff ist ausdrücklich nicht Gegenstand der offenbarten Erfindung.

Aus der Patentliteratur sind Reaktoren für unterschiedlichste Gasphasenreaktionen bekannt, welche eine Abfolge von mindestens zwei Katalysatorbetten beinhalten.

US-A-2,475,855 beschreibt einen Reaktor für katalytische endo- oder exotherme Reaktionen, in dessen Innern sich mehrere radiale Katalysatorschüttungen befinden. Diese sind voneinander getrennt angeordnet und weisen axial eine Leitung auf, in welcher Reaktanten dem Katalysator zugeführt werden und diesen radial durchströmen. Auch die umgekehrte Strömungsrichtung ist möglich. Der Reaktor wird beispielsweise beim katalytischen Cracken von Kohlenwasserstoffen eingesetzt.

US-A-4,372,920 beschreibt einen Reaktor für heterogene katalytische Gasphasenreaktionen, in dessen Innern sich ebenfalls mehrere radiale Katalysatorschüttungen befinden. Diese sind voneinander getrennt angeordnet und weisen ebenfalls axial eine Leitung auf. Die Reaktanten durchströmen Teile der einzelnen Katalysatorbetten axial und andere Teile dieser Katalysatorbetten radial. Der Reaktor kann beispielsweise zur Synthese von Ammoniak oder von Methanol eingesetzt werden.

EP-A-1,022,056 beschreibt einen Reaktor für die Behandlung von Fluiden, der zwei unmittelbar aneinander grenzende Schüttungen von Adsorptionsmitteln oder Katalysatoren in einem Behälter umfasst. Die Schüttungen bestehen aus Granulaten unterschiedlicher Korngröße, wobei die unterste Schüttung die gröbere Korngröße aufweist. Dazwischen ist ein Lochblech angeordnet, dessen Löcher Durchmesser aufweisen, die größer sind als die Durchmesser der Körner der oberen Schüttung und kleiner als die Durchmesser der unteren Schüttung. Der Reaktor kann zur Filtration, Reinigung, Auftrennung und katalytischen Umsetzung von Fluiden eingesetzt werden.

US-A-3,733,181 beschreibt einen Reaktor für die katalytische Reduktion von Stickoxiden und für die katalytische Oxidation von Kohlenwasserstoffen und von Kohlenmonoxid aus Abgasen. Der Reaktor umfasst eine Kombination zweier konzentrischer Schüttungen von Katalysatoren für die beiden Reaktionen, durch welche das Abgas nacheinander geleitet wird. Zwischen den beiden Schüttungen wird dem zu behandelnden Abgas Luft zugeführt.

Aus EP-A-967,006 ist eine Vorrichtung zur Durchführung katalytischer Reaktionen eines Fluids in der Gasphase bekannt. Dieses beinhaltet in einem Reaktor eine Anordnung von zwei Katalysatorbetten, welche direkt aneinander grenzen, jeweils im Wesentlichen zylindrisch ausgebildet sind, und von denen eines radial und das andere axial durchströmt wird. Diese Vorrichtung kann beispielsweise bei der Entschwefelung von Erdgas eingesetzt werden.

Bislang werden in kommerziellen Verfahren zur kombinierten Reduktion von NO_{X} und Zersetzung von N₂O in Gasen im niederen bis mittleren Temperaturbereich bei etwa 200 bis 600°C hauptsächlich mit Eisen dotierte Zeolithe eingesetzt. Wie vorab beschrieben, zeichnen sich derartige Katalysatoren insbesondere zum einen durch eine sehr hohe Aktivität zur NO_{X}-Reduktion mittels Ammoniak und zum anderen durch eine hohe Aktivität zur Zersetzung von N₂O aus, welche in Anwesenheit von NO_{X} noch deutlich gesteigert wird.

Andere Katalysatoren für die Zersetzung von N₂O, welche durch die gleichzeitige Anwesenheit von NO_{X} desaktivieren, können in der industriellen Praxis, d.h. in sowohl NO_{X} als auch N₂O enthaltenden Gasen, nur unter besonderen Bedingungen eingesetzt werden. Es wäre wünschenswert, wenn das Anwendungsspektrum derartiger Katalysatoren verbreitert werden könnte, so dass diese Katalysatoren ebenfalls bei der Entfernung von Stickoxiden aus Abgasen eingesetzt werden könnten.

Aufgrund der bisher vorliegenden Informationen über andere Katalysatoren als mit Eisen dotierte Zeolithe, die zur katalytischen Zersetzung von N₂O eingesetzt werden könnten, würde man für diese anderen Katalysatoren ein kombiniertes Verfahren zur Entfernung von Stickoxiden aus Gasen vorsehen, bei dem in einer ersten Stufe eine möglichst weitgehende NO_{X}-Reduktion mit z.B. Ammoniak stattfindet, und in einer nachgeschalteten Stufe dann das verbliebene N₂O zersetzt bzw. reduziert würde. Eine solche mehr oder weniger vollständige Entfernung des NO_{X} in der ersten Stufe könnte durch die Zugabe entsprechend großer Mengen an Ammoniak erfolgen. Dabei aber besteht bei Einsatz klassischer SCR-Katalysatoren, z.B. solchen auf V₂O₅-TiO₂-Basis, die Gefahr, dass bei begrenzten Katalysatormengen nicht die gesamte Menge an zugegebenem Ammoniak auch mit NO_{X} reagiert und damit ein unerwünschter Schlupf an Ammoniak resultiert. Dies ist bei der kombinierten NO_{X}-Reduktion und N₂O-Zersetzung deshalb problematisch, da das Ammoniak dann in die nachgeschaltete DeN₂O-Stufe gelangt und dort bei Verwendung von nicht mit Übergangsmetallen dotierten Zeolithen zumindest teilweise zu NO_{X}, d.h. zu NO und NO₂, oxidiert wird. Dies wiederum führt zu einer partiellen Inhibierung bzw. Desaktivierung des DeN₂O-Katalysators.

Außerdem ist bekannt, dass die klassischen SCR-Katalysatoren im Allgemeinen nur bei Temperaturen von bis zu 400°C einsetzbar sind. Um eine stufenweise Aufheizung des zu behandelnden Gasstromes zu vermeiden und eine einfache apparative Ausgestaltung zu ermöglichen, sollten beide Stufen des Stickoxid-Abbaus, d.h. die DeNO_{X}-Stufe und die DeN₂O-Stufe, bei etwa gleichen Temperaturen betrieben werden.

Aufgabe der vorliegenden Erfindung ist es damit, eine Vorrichtung und ein Verfahren zur möglichst weitgehende Entfernung von N₂O und NO_{X} aus Gasen bereitzustellen, bei dem eine Kombination von ausgewählten DeNO_{X}-Katalysatoren mit bislang nicht oder nur eingeschränkt verwendbaren Katalysatoren für die katalytische Zersetzung von N₂O zum Einsatz gelangt. Dabei sollen insbesondere Katalysatoren zur NO_{X}-Reduktion bzw. zur N₂O-Zersetzung verwendet werden, welche sich durch eine sehr hohe katalytische Effizienz auszeichnen.

Weiterhin ist es Aufgabe der vorliegenden Erfindung eine Vorrichtung und ein Verfahren bereitzustellen, welche auf einfache und wirtschaftlich günstige Weise betrieben werden können.

Überraschend wurde jetzt gefunden, dass die Kombination von ausgewählten Zeolithen in der DeNO_{X}-Stufe mit ausgewählten Katalysatoren in der DeN₂O-Stufe eine apparativ sehr einfache und äußerst wirtschaftliche Entfernung von Stickoxiden aus Gasen gestattet.

Die für die DeNO_{X}-Stufe ausgewählten Zeolith-Katalysatoren lassen sich aufgrund ihrer hohen Aktivität im Temperaturbereich von etwa 350 bis 600°C problemlos einsetzen und werden mit DeN₂O-Katalysatoren kombiniert, die im gleichen Temperaturbereich aktiv sind.

Der erfindungsgemäße Einsatz von mit Übergangsmetallen dotierten Zeolithen als DeNO_{X}-Katalysatoren hat gegenüber konventionellen SCR-Katalysatoren, wie z.B auf V₂O₅-WO₃/TiO₂- oder Pt/Al₂O₃-Basis mehrere Vorteile.

Zum einen sind diese Zeolithe im Bereich mittlerer Temperaturen bis zu 600°C hoch aktiv und selektiv, während konventionelle V₂O₅-WO₃/TiO₂-Katalysatoren, nur bei Temperaturen von bis zu ca. 400°C eingesetzt werden können. Somit erlauben diese Zeolithe die Kombination mit DeN₂O-Katalysatoren, die im Bereich mittlerer Temperaturen hoch aktiv sind.

Ein weiterer entscheidender Vorteil der mit Übergangsmetallen dotierten Zeolithe als DeNO_{X}-Katalysatoren im Vergleich zu den konventionellen SCR-Katalysatoren ist deren Verhalten bei Überdosierung von Reduktionsmittel.

Wie zuvor erwähnt, ist eine solche Überdosierung an Reduktionsmittel, d.h eine im Verhältnis zur Reduktionsstöchiometrie - z. B. der Reaktion von NO_{X} mit NH₃, welche bekanntermaßen im Molverhältnis von 1:1 abläuft - überstöchiometrische Zugabe von NH₃ sehr vorteilhaft, um eine möglichst weitgehende NO_{X}-Reduktion zu erreichen. Während beim Einsatz von konventionellen SCR-Katalysatoren überschüssig dosiertes Ammoniak weitestgehend durch das Katalysatorbett schlupft und auf den nachgeschalteten DeN₂O-Katalysator gelangt, wo dieses dann zumindest teilweise zu NO_{X} oxidiert wird, tritt ein solcher NH₃-Schlupf bei erfindungsgemäßer Verwendung eines übergangsmetalldotierten Zeolith-Katalysators nicht auf. Überschüssig dosiertes NH₃, welches nicht mit NO_{X} abreagiert, wird auf diesen Katalysatoren vielmehr durch ebenfalls im Abgas vorhandenes O₂ und/oder N₂O selektiv zu N₂ und H₂O oxidiert. Auf diese Weise kann bei einem relativ geringen Katalysatorvolumen der DeNO_{X}-Stufe eine vollständige Reduktion des NO_{X} erreicht werden, so dass in der nachgeschalteten DeN₂O-Stufe NO_{X}-sensitive Katalysatoren zur N₂O-Zersetzung eingesetzt werden können.

Eine vollständige NO_{X}-Reduktion ohne NH₃-Schlupf könnte mit konventionellen SCR-Katalysatoren, wenn überhaupt, nur bei entsprechend übergroßer Dimensionierung des Katalysatorbettes erreicht werden. Dieser Ansatz ist aber im Vergleich zum erfindungsgemäßen Verfahren nicht wirtschaftlich.

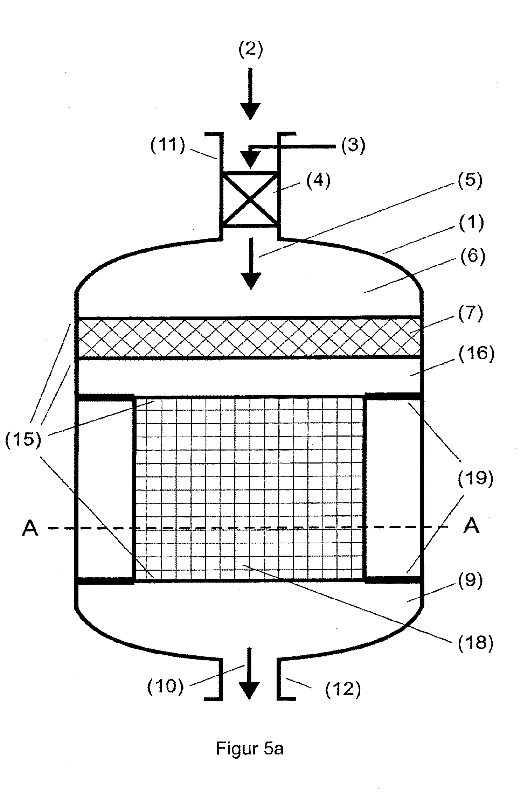

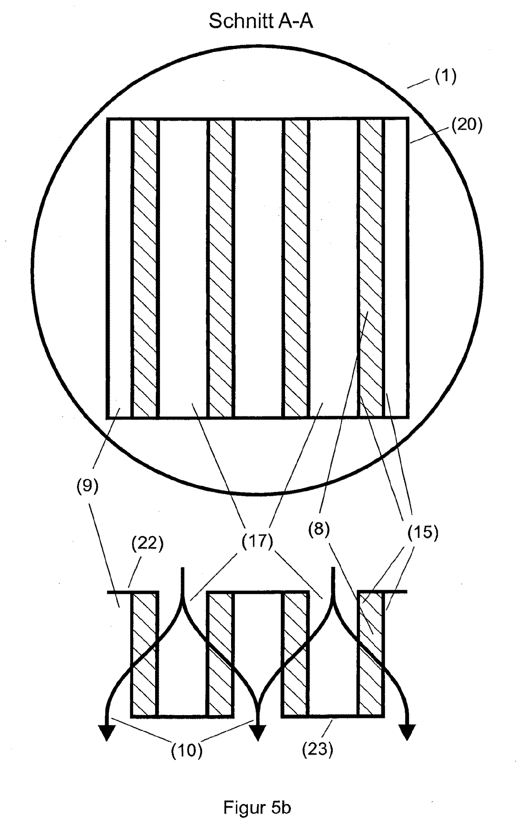

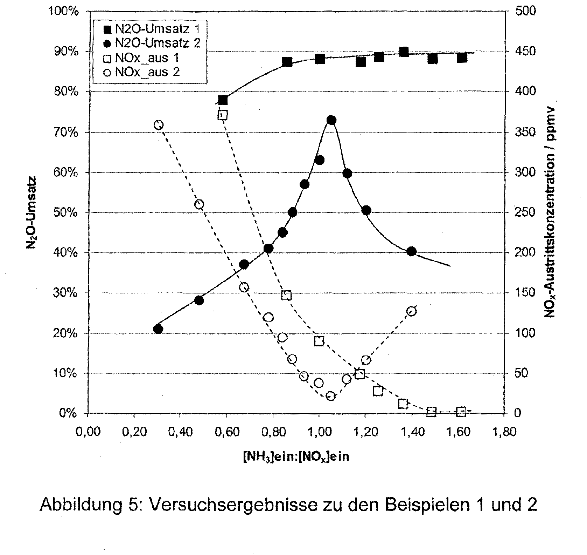

Ein weiterer Vorteil bei Verwendung von mit Übergangsmetallen dotierten Zeolith-Katalysatoren in der DeNO_{X}-Stufe ist schließlich, dass diese neben der Reduktion des NO_{X} die Zersetzung des N₂O simultan katalysieren, so dass bereits in der DeNO_{X}-Stufe ein gewisser Anteil an N₂O abgebaut wird. In überraschender und positiver Weise wirkt sich dieser Effekt, insbesondere bei der Verwendung von mit Eisen dotierten Zeolith-Katalysatoren in Kombination mit NO_{X}-sensitiven Katalysatoren in der DeN₂O-Stufe so aus, dass der N₂O-Abbau über beiden Reaktionsstufen nur noch eine geringfügige Abhängigkeit vom NO_{X}-Gehalt am Austritt bzw. am Eintritt der DeN₂O-Stufe aufweist (vgl. auch Abbildung 5).

Unter NO_{X}-sensitiven DeN₂O-Katalysatoren werden im Rahmen dieser Anmeldung, solche DeN₂O-Katalysatoren verstanden, bei welchen die katalytische N₂O-Zersetzung durch gleichzeitig Anwesenheit von NO_{X} im zu behandelnden Gastrom signifikant beinträchtigt, d.h. unter sonst gleichen Bedingungen signifikant gemindert wird. Dabei handelt es sich im Sinne dieser Anmeldung dann um NO_{X}-sensitive DeN₂O-Katalystoren, wenn die Temperatur, bei welcher unter den Bedingungen des nachstehend beschriebenen Versuchs 5 (NO_{X}-Gehalt = 1000 ppm) ein 50%iger N₂O-Abbau erreicht wird mindestens 10K höher liegt als die Temperatur für ein 50%igen N₂O-Abbau unter den Bedingungen des nachstehend beschriebenen Versuchs 4 (NO_{X}-Gehalt = 0 ppm).

Insgesamt werden die vorstehend genannten Aufgaben durch die nachstehend beschriebene Vorrichtung und das nachstehend beschriebene Verfahren gelöst.

Die Erfindung betrifft eine Vorrichtung zur Minderung des Gehalts von NO_{X} und N₂O in Gasen, insbesondere in Prozessgasen und Abgasen, umfassend:
A) einen Behälter (1) und darin angeordnet
B) zwei hintereinander geschaltete Reaktionsstufen für die Entfernung von NO_{X} (DeNO_{X}-Stufe) durch Reduktion von NOₓ mit einem Stickstoff enthaltenden Reduktionsmittel und dazu nachgeschaltet für die Entfernung von N₂O durch katalytische Zersetzung von N₂O in N₂ und O₂ (DeN₂O-Stufe), welche jeweils ein oder mehrere Katalysatorbetten (7, 8) aufweisen und welche von dem zu reinigenden Gas durchströmt werden, wobei
C) mindestens ein Katalysatorbett der DeNO_{X}-Stufe (7) einen Katalysator für die Reduktion von NO_{X} mit Stickstoff enthaltenden Reduktionsmitteln enthält, welcher mit Übergangsmetallen, einschließlich der Lanthaniden, dotierte Zeolithe enthält,
D) mindestens ein Katalysatorbett der DeN₂O-Stufe (8) einen Katalysator für die Zersetzung von N₂O in N₂ und O₂ enthält, der eine oder mehrere katalytische aktive Verbindungen von Elementen ausgewählt aus den Gruppen 5 bis 11 des Periodensystems der Elemente enthält, ausgenommen mit Eisen dotierte Zeolithe, und
E) vor der DeNO_{X}-Stufe (7) eine Vorrichtung zum Einbringen eines Stickstoff enthaltenden Reduktionsmittels in den Strom des NO_{X} und N₂O enthaltenden Gases vorgesehen ist.

Die erfindungsgemäße Vorrichtung umfasst einen Behälter A), in welchem die beiden Reaktionsstufen mit den Katalysatorbetten untergebracht sind. Dabei kann es sich um einen konventionellen Druckbehälter handeln, der beispielsweise aus Stahl gefertigt sein kann. Der Behälter ist mit Ein- und Austrittsöffnungen für das zu reinigende Gas, für das gereinigte Gas und für gegebenenfalls in den Behälter einzubringende Hilfsmittel, wie das Reduktionsmittel für NO_{X}, ausgestattet. Darüber hinaus kann der Behälter mit üblichen Hilfsvorrichtungen, wie mit Mannlöchern, Flanschen, Stutzen oder abnehmbaren Deckeln ausgestattet sein.

Die erfindungsgemäße Vorrichtung ist dadurch gekennzeichnet, dass diese mindestens zwei Reaktionsstufen aufweist, welche ausgewählte Katalysatoren enthalten. Die Katalysatorbetten dieser Reaktionsstufen können direkt aneinander grenzen oder auch voneinander beabstandet angeordnet sein, beispielsweise durch einen leeren Raumabschnitt, der gegebenenfalls strömungsleitende oder die Konstruktion stützende Elemente aufweisen kann. Das bedeutet, dass das diese Betten durchströmende Gas von einem in das andere Katalysatorbett gelangt, ohne dass irgendwelche Vorrichtungen zur Modifikation der Zusammensetzung des Gases, wie Misch- oder Heizvorrichtungen, zwischen diese Katalysatorbetten geschaltet sind. Gegebenenfalls können zwischen den Katalysatorbetten strömungsleitende oder die Katalysatorschüttung tragende oder stabilisierende Elemente, wie Lochbleche oder Drahtböden, vorgesehen sein.

Vor der DeNO_{X}-Stufe ist eine Vorrichtung E) zur Einbringung eines Reduktionsmittels für NO_{X} in den Strom des NO_{X} und N₂O enthaltenden Gases vorgesehen. Diese kann vor dem Einleiten des zu reinigenden Gasstromes in den Reaktor in die Zuleitung des Gasstromes münden oder auch in den Reaktor vor dem Einleiten des Gasstromes in das erste Katalysatorbett. Bei der Vorrichtung E) zur Einbringung eines Reduktionsmittels für NO_{X} in den Strom des NO_{X} und N₂O enthaltenden Gases kann es sich um eine einfache Zuleitung handeln, die am reaktorseitigen Ende vorzugsweise ein oder mehrere Düsen aufweist. Die Zuleitung kann direkt in die Leitung für das NO_{X} und N₂O enthaltende Gas münden.

In einer bevorzugten Ausführungsform enthält die erfindungsgemäße Vorrichtung mindestens eine Messstelle F) für den Fluss oder die Menge des Gases und/oder mindestens eine Messstelle G) für die Bestimmung der Konzentration an NO_{X} (oder einer seiner Einzelkomponenten) in dem Gas. Die Messstelle F) ist üblicherweise vor der DeNO_{X}-Stufe angebracht. Die Messstelle G) für die im Gas enthaltene Konzentration an NO_{X} befindet sich entweder vor der DeNO_{X}-Stufe, nach der DeNO_{X}-Stufe und vor der DeN₂O-Stufe oder nach der DeN₂O-Stufe.

In einer besonders bevorzugten Ausführungsform der erfindungsgemäßen Vorrichtung ist die Messstelle G) nach der DeN₂O-Stufe oder besonders bevorzugt vor der DeNOₓ-Stufe in der Zuleitung für das Stickoxide enthaltende und zu reinigende Gas angebracht.

Aus dem Wert der Messstelle F) und dem Wert der Messstelle G) kann die benötigte Menge an Reduktionsmittel für die DeNOₓ-Stufe ermittelt und bemessen werden.

In einer bevorzugten Ausführungsform der erfindungsgemäßen Vorrichtung sind die Messstellen F) und G) zur Ermittlung der Menge des eingespeisten Reduktionsmittels über eine Steuer- oder Regeleinheit H) mit einer Stellvorrichtung I) beispielsweise mit einem steuer- oder regelbaren Ventil gekoppelt, mit welchem der Fluss bzw. die Menge des die Vorrichtung E) durchströmenden Reduktionsmittels eingestellt werden kann. Die Steuer- oder Regeleinheit H) liefert dafür eine Stellgröße, mit welcher die Stellvorrichtung I) in geeigneter Weise angesprochen wird. Alternativ kann dem Stickoxide enthaltenden Gas auch ein Gemisch aus Inertgas, beispielsweise Stickstoff, und gasförmigem Reduktionsmittel zugeführt werden; dabei kann die Einstellung der zugeführten Menge des Reduktionsmittels durch Variation des Inertgasanteils erfolgen. Dem Fachmann sind derartige Dosierungen bekannt.

Die Anordnung, Ausgestaltung und Durchströmung der Katalysatorbetten kann in unterschiedlicher Weise erfolgen.

Katalysatorbetten haben häufig eine geometrische Form, welche in einer Dimension kleiner ist als in den beiden anderen Dimensionen. Dabei definieren die zwei größeren Dimensionen eine Fläche, mit welcher sich die Anordnung des Katalysatorbettes im Reaktor beschreiben lässt. In der erfindungsgemäßen Vorrichtung können die Katalysatorbetten nun im Blick auf diese Flächen parallel oder senkrecht zur Hauptachse des Behälters ausgerichtet sein; auch Kombinationen von parallel und senkrecht oder von senkrecht und parallel ausgerichteten Katalysatorbetten sind möglich. Das Gas durchströmt die Katalysatorbetten im Allgemeinen entlang der kleineren Dimension, d.h. quer zur Fläche, welche durch die beiden größeren Dimensionen definiert wird. Eine solche Strömung wird im Folgenden mit "lateraler Strömung" bezeichnet.

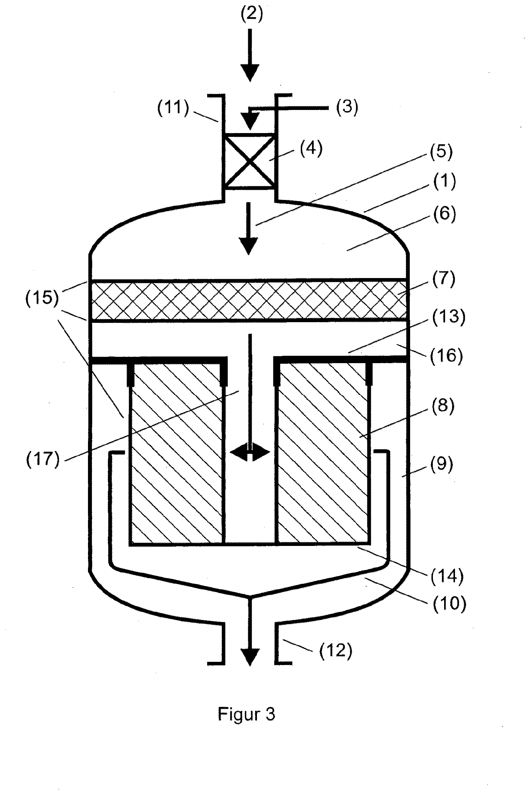

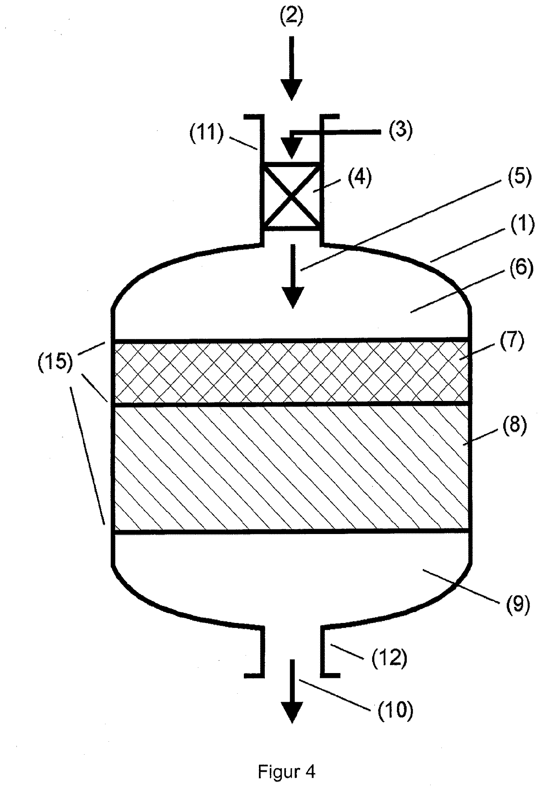

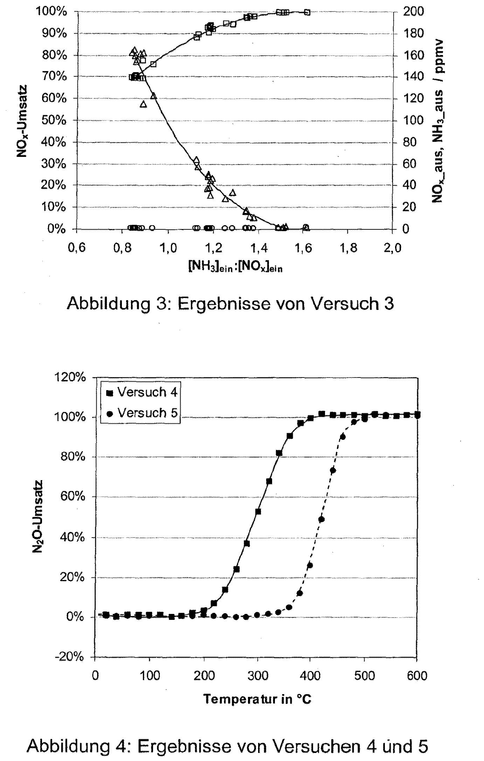

In der einfachsten Ausgestaltung der erfindungsgemäßen Vorrichtung weisen die Katalysatorbetten beider Reaktionsstufen die Form von zwei oder mehreren übereinander liegenden horizontalen, gegebenenfalls durch einen Hohlraum getrennte Schichten aufweisen. Das Gas kann beispielsweise von oben in die erste Katalysatoranordnung für die Reduktion des NO_{X} eingebracht werden, durchströmt diese nach unten und daran anschließend gegebenenfalls zuerst in einen leeren Zwischenraum und daran anschließend in die weitere(n) Katalysatoranordnung(en) für die Zersetzung des N₂O. Das gereinigte Gas verlässt die letzte Katalysatoranordnung an der unteren Seite in den Ausgangsbereich des Reaktors und verlässt sodann den Reaktor. Eine solche Ausgestaltung der erfindungsgemäßen Vorrichtung ist in den Figuren 3 und 4 dargestellt.

In einer bevorzugten Ausführungsform der erfindungsgemäßen Vorrichtung ist mindestens ein Katalysatorbett einer Reaktionsstufe, vorzugsweise mindestens ein Katalysatorbett beider Reaktionsstufen so ausgestaltet bzw. angeordnet, dass es von dem zu reinigenden Gas lateral, insbesondere radial durchströmt wird. Lateral bzw. radial durchströmte Betten verursachen im Vergleich zu axial durchströmten Betten einen deutlich geminderten Druckverlust, da sie aufgrund einer größeren Anströmfläche für das Gas bei gleicher Raumgeschwindigkeit das Einstellen niedriger Lineargeschwindigkeiten gestatten. Beim Einsatz von radial durchströmten Katalysatorbetten ist im Allgemeinen darauf zu achten, dass durch geeignet angebrachte strömungsleitende Elemente, beispielsweise auf den Stirnseiten der Radialbetten angebrachte Bleche, der Weg des Gases so vorgegeben wird, dass zunächst das vom Katalysator ausgefüllte Volumen vom Gas auch radial durchströmt wird und nicht über die Stirnseiten entweichen kann.

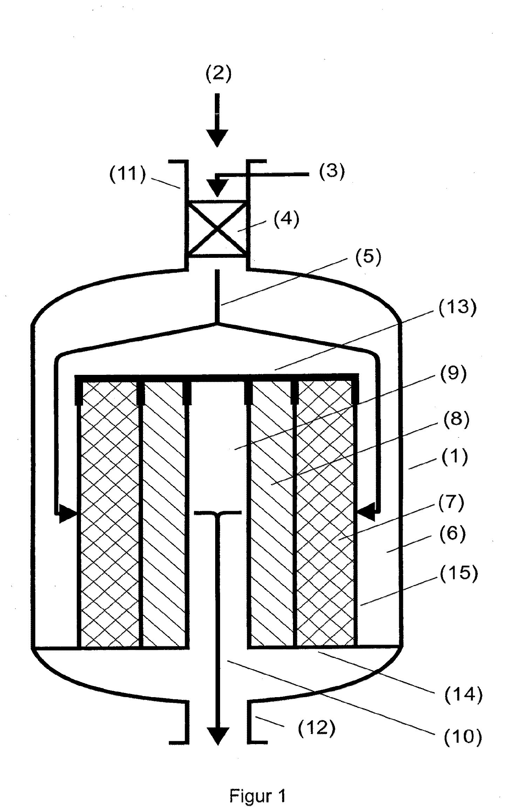

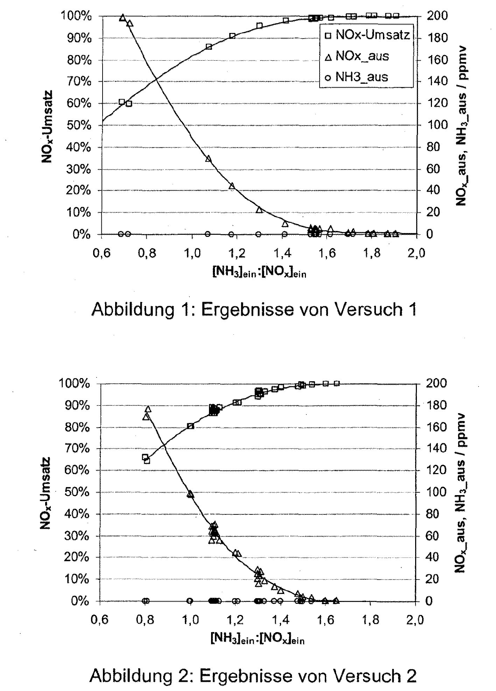

In einer bevorzugten Ausführungsform haben die Radialbetten einer oder insbesondere bevorzugt beide Reaktionsstufen die Form eines Hohlzylinders. Im letzteren Fall sind die Hohlzylinder bevorzugt konzentrisch ineinander gestellt, wobei sich die Hohlzylinder an der äußeren bzw. inneren Mantelfläche einander berühren oder sich zwischen ihnen ein leerer Raum befindet. Bei dieser Ausführungsform weist der innere Hohlzylinder im Zentrum einen Hohlraum auf, durch welchen Gas in den Katalysator eingebracht werden kann bzw. aus dem Katalysator abgeführt werden kann. In einer Variante kann das Gas axial eingebracht werden und strömt radial nach außen; zuerst durch den inneren Hohlzylinder mit dem Katalysator für die Reduktion des NO_{X} und daran entweder direkt anschließend durch den äußeren Hohlzylinder mit dem Katalysator für die Zersetzung des N₂O oder daran anschließend durch einen Hohlraum und daran anschließend durch den äußeren Hohlzylinder mit dem Katalysator für die Zersetzung des N₂O. Das gereinigte Abgas strömt dann über den äußeren Mantel des äußeren Hohlzylinders in den Ausgangsbereich des Reaktors und sodann aus dem Reaktor. Eine solche Ausgestaltung der erfindungsgemäßen Vorrichtung ist in Figur 1 dargestellt.

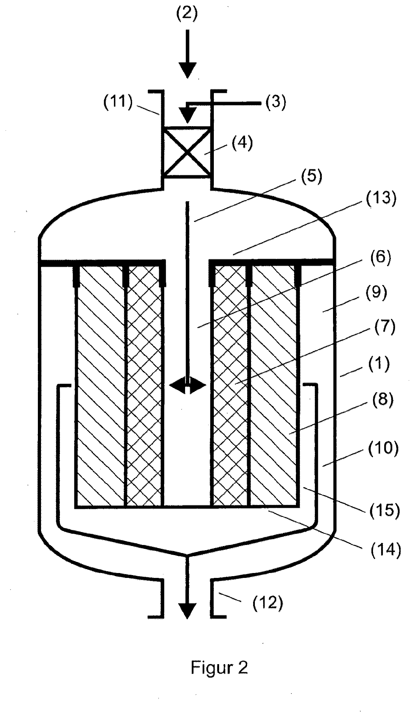

In einer anderen Betriebsweise kann eine solche Vorrichtung auch in entgegengesetzter Weise durchströmt werden, wobei der äußere Hohlzylinder aus dem Katalysator für die Reduktion des NO_{X} und der innere Zylinder aus dem Katalysator für die Zersetzung des N₂O gebildet wird. Eine solche Ausgestaltung der erfindungsgemäßen Vorrichtung ist in Figur 2 dargestellt.

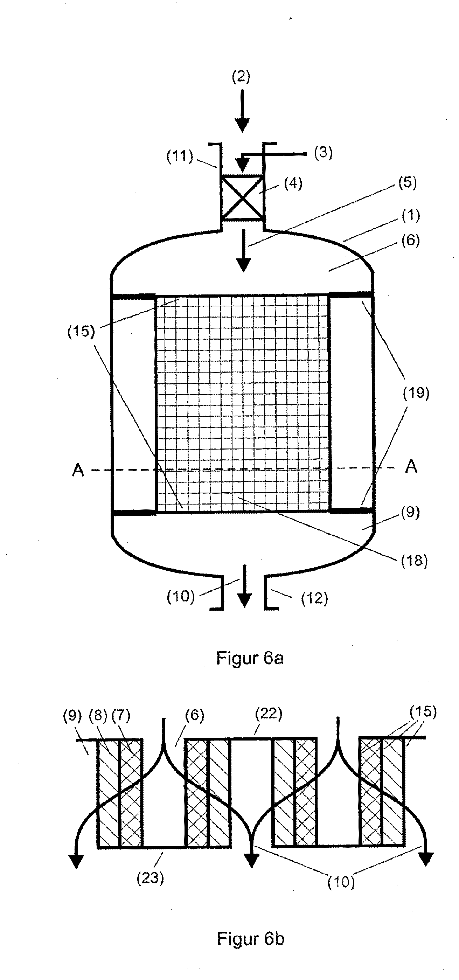

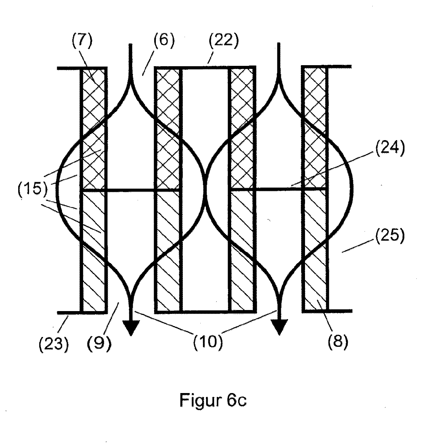

Weitere Ausgestaltungen des erfindungsgemäßen Reaktors sind in den Figuren 5 und 6 dargestellt.

Vor dem Eintritt des Gases in das erste Katalysatorbett wird dem NO_{X} und N₂O enthaltenden Gas mindestens ein Stickstoff enthaltendes Reduktionsmittel für die Reduktion des NO_{X} zugesetzt. Die Art der Einbringung des/der Reduktionsmittel(s) in den zu behandelnden Gasstrom ist im Sinne der Erfindung frei gestaltbar. Das Reduktionsmittel kann in Form eines Gases oder auch einer Flüssigkeit bzw. wässrigen Lösung eingebracht werden, die im zu behandelnden Gasstrom verdampft. Die Einspeisung in den zu behandelnden Gasstrom erfolgt durch eine geeignete Einleitevorrichtung, wie z.B. durch ein entsprechendes Druckventil oder durch entsprechend ausgestaltete Düsen. Bei Verwendung verschiedener Reduktionsmittel kann Zuführung und Einleitung in das zu reinigende Gas getrennt oder zusammen erfolgen.

Um die Durchmischung des zu reinigenden Gasstroms mit dem zugeführten Reduktionsmittel zu fördern und vor Eintritt in die DeNOₓ-Stufe eine möglichst innige Verteilung des Reduktionsmittels im Gasstrom zu erreichen, kann vor dem Eintritt in Eintritt in die DeNO_{X}-Stufe ein Mischer vorgesehen werden, welcher vorzugsweise in der Leitung für den zu behandelnden Gasstrom angeordnet ist.

Der Mischer ist im Sinne der Erfindung frei gestaltbar, beispielsweise als statischer Mischer mit entsprechenden Einbauten oder als dynamischer Mischer. Auch die einfachste Form eines vorzugsweise turbulent durchströmten Rohres ist als Mischer im Sinne der Erfindung anzusehen.

In der DeNO_{X}-Stufe kommen ausgewählte DeNO_{X}-Katalysatoren zum Einsatz, welche im Temperaturbereich von 350 bis 600°C, insbesondere zwischen 400 und 600°C folgende Eigenschaften aufweisen:
a) eine hohe katalytische Aktivität und Selektivität zur chemischen Umsetzung von NO_{X} mit Stickstoff enthaltenden Reduktionsmitteln zu N₂ und H₂O
b) eine signifikante katalytische Aktivität zur selektiven Oxidation von überstöchiometrisch dosiertem Reduktionsmittel mit O₂ und oder N₂O zu N₂ und H₂O
c) und möglichst eine signifikante Aktivität zur Zersetzung von N₂O in N₂ und O₂

Bei den DeNO_{X}-Katalysatoren handelt es sich um Katalysatoren, welche mit Übergangsmetallen, einschließlich der Lanthaniden, dotierte Zeolithe, vorzugsweise mit Kobalt, insbesondere mit Kupfer und ganz besonders bevorzugt mit Eisen dotierte Zeolithe enthalten. Weitere mögliche Übergangsmetalle, die vorzugsweise zusammen mit Kobalt, Kupfer und/oder Eisen im Zeolithen auftreten, sind Mangan, Vanadium, Chrom oder Nickel.

Bei den Zeolithen handelt es sich vorzugsweise um "high silica"-Zeolithe, die eine hohe hydrothermale Beständigkeit aufweisen.

Vorzugsweise sind die Zeolithe ausgewählt aus der Gruppe der Typen MFI, BEA, FER, MOR und MEL oder Mischungen davon, bevorzugt vom Typ BEA oder MFI, besonders bevorzugt handelt es sich um einen ZSM-5-Zeolithen.

Genaue Angaben zum Aufbau oder Struktur der erfindungsgemäß eingesetzten Zeolithtypen werden im Atlas of Zeolite Structure Types, Elsevier, 4th revised Edition 1996, gegeben, auf den hier ausdrücklich Bezug genommen wird.

Darüber hinaus werden bevorzugt sogenannte "gesteamte" Zeolithe eingesetzt, also Zeolithe, bei denen nach einer hydrothermalen Behandlung sich ein Teil der Aluminiumgitteratome auf Zwischengitterplätze verschoben hat. Dem Fachmann sind derartige Zeolithe und deren Herstellungsweise bekannt.

Der Gehalt an Übergangsmetallen in den Zeolithe kann, bezogen auf die Masse an Zeolith, in weiten Bereichen schwanken, beispielsweise bis zu 25% betragen, vorzugsweise jedoch 0,1 bis 10%, und insbesondere 2 bis 7% betragen.

Die Dotierung der Zeolithe mit den Übergangsmetallen kann bspw. ausgehend von der H- oder bevorzugt NH₄-Form der Zeolithe durch Ionenaustausch (in wässriger Phase oder durch Festkörperreaktion) mit entsprechenden Salzen der Übergangsmetalle erfolgen. Die erhaltenen Katalysatorpulver werden üblicherweise in einem Kammerofen an der Luft bei Temperaturen im Bereich von 400 bis 650°C kalziniert. Nach dem Kalzinieren werden die Übergangsmetall-haltigen Zeolithe in destilliertem Wasser intensiv gewaschen und nach Abfiltrieren des Zeolithen getrocknet. Diese und andere einschlägige Methoden zur Beladung bzw. Dotierung von Zeolithen mit Übergangsmetallen sind dem Fachmann bekannt. Abschließend werden die so erhaltenen Übergangsmetallhaltigen Zeolithe mit geeigneten Hilfsstoffen zur Plastifizierung und Bindemitteln, wie beispielsweise Alumosilikaten oder Böhmit, versetzt und gemischt und beispielsweise zu zylindrischen Katalysatorkörpern extrudiert.

Der DeNO_{X}-Katalysator kann als Formkörper beliebiger Größe und Geometrie vorliegen, bevorzugt in Geometrien, die ein großes Verhältnis von Oberfläche zu Volumen aufweisen und bei deren Durchströmung ein möglichst geringer Druckverlust erzeugt wird. Typisch sind alle in der Katalyse bekannten Geometrien, wie z.B. Zylinder, Hohlzylinder, Mehrlochzylinder, Ringe, Granulatbruch, Trilobes oder Wabenstrukturen. Die Größe der eingesetzten Katalysatorpartikel bzw. -formkörper kann in weiten Bereichen schwanken. Typischerweise weisen diese Äquivalenzdurchmesser im Bereich von 1 bis 10 mm auf. Bevorzugt sind Äquivalenzdurchmesser von 2 bis 5 mm auf. Der Äquivalenzdurchmesser ist dabei der Durchmesser einer volumengleichen Kugel.

Nach der Reduktion des NO_{X} wird das zu behandelnde Gas direkt in die DeN₂O-Stufe geleitet, welche ein oder mehrere Katalysatorbett(en) mit Katalysator für die Zersetzung von N₂O in Stickstoff und Sauerstoff enthält.

Erfindungsgemäß werden in der/den DeN₂O-Stufe(n) Katalysatoren eingesetzt, die im Temperaturbereich von 350 bis 600°C in eine hohe katalytische Aktivität zur Zersetzung von N₂O in N₂ und O₂ aufweisen. Insbesondere kommen solche Katalysatoren zum Einsatz, deren Aktivität zur N₂O-Zersetzung durch die Anwesenheit von NO_{X} deutlich eingeschränkt ist (sog. NO_{X}-sensitive DeN₂O-Katalysatoren).

Diese Katalysatoren enthalten eine oder mehrere katalytische aktive Verbindungen von Elementen ausgewählt aus den Gruppen 5 bis 11 des Periodensystems der Elemente. Insbesondere bevorzugt sind Verbindungen der Elemente der Gruppe 9 bis 11 des PSE. Hiervon wiederum bevorzugt sind die Verbindungen der Elemente Co, Pt, Pd, Ir, Rh, Ni und/oder Cu, vorzugsweise Co, Rh, Ni und/oder Cu und hierbei insbesondere Co oder Rh. Ausgenommen von den in der DeN₂O-Stufe eingesetzten Katalysatoren sind mit Eisen dotierte Zeolithe. Bei dieser Gruppe von Katalysatoren handelt es sich nicht um "NOₓ-sensitive" DeN₂O-Katalysatoren.

Bei den katalytisch aktiven Verbindungen selbst kann es sich um metallische und/oder oxidische Verbindungen handeln, wobei letztere sowohl als singuläre Oxide oder auch als binäre, ternäre oder polynäre Mischoxide unterschiedlichen Strukturtyps, wie z.B. Perowskite oder Spinelle vorliegen können. Solche sind bspw. in Catalysis Letters 35 (1995) 372-382, Applied Catalysis 73 (1991) 165-171, Catal. Rev.-Sci. Eng.; 34(4), 409-425 (1992) oder Actes du 2ième Congres International sur la Catalyse 97 (1961) 1937-1953 beschrieben. Es können auch Gemische von verschiedenen katalytisch aktiven Verbindungen eingesetzt werden.

Beispiele für besonders bevorzugte katalytisch aktive Verbindungen sind metallisches Rhodium, Rhodiumoxide, wie RhO₂, oder Rh₂O₃, CoO, Co₂O₃, Co-haltige Spinelle, wie Co₃O₄, Cu_{X}Co_{3-X}O₄ oder Co-haltige Perowskite wie LaCoO₃ oder auf A- und B-Plätzen substituierte Co-haltige Perowskite.

Die katalytisch aktiven Verbindungen können in den Katalysatoren in reiner Form enthalten sein oder auf geeigneten Trägermaterialien aufgebracht bzw. mit solchen vermengt sein.

Im ersten Fall handelt es sich um sog. Vollkatalysatoren, welche neben aktiven Verbindungen noch dem Fachmann bekannte Zusätze wie Bindemittel oder andere herstellungsbedingte Zusätze wie Plastifikatoren, Porenbildner, Faserverstärkungen oder Presshilfsmittel enthalten können. Die Methoden zur Herstellung derartiger Katalysatoren sind dem Fachmann bekannt. Im Falle von "Trägerkatalysatoren" sind die katalytisch aktiven Verbindungen auf das Trägermaterial aufgebracht. Hierdurch erfährt die katalytisch aktive Verbindung eine Dispergierung und Stabilisierung sowohl gegen mechanische als auch thermische Belastung. Die Methoden zur Herstellung derartiger Katalysatoren sind dem Fachmann ebenfalls bekannt.

Bei den Trägermaterialien handelt es sich bevorzugt um refraktäre Oxide, wie SiO₂, TiO₂, ZrO₂ oder Al₂O₃ bzw. Gemische von zwei oder mehreren davon oder um Materialien, die selbst eine gewisse katalytische Aktivität zur N₂O-Zersetzung aufweisen, wie bspw. MgO, Zeolithe, Hydrotalcite oder Gemische von zwei oder mehreren davon.

Bevorzugt werden DeN₂O-Katalysatoren eingesetzt, die keine oder im Wesentlichen keine Zeolithe, vorzugsweise weniger als 15 Gew. % an Zeolithen, inbesondere weniger als 5 Gew. % an Zeolithen, enthalten.

Bevorzugte Trägermaterialien für Rh-haltige Verbindungen sind ZrO₂, TiO₂, Al₂O₃, Hydrotalcite oder Zeolithe, z.B. vom Typ MFI. Solche werden bspw. in Chemical Engineering and Technology 24 (2001) 281-285 oder in Catalysis Today 35 (1997) 113-120 beschrieben.

Besonders bevorzugte Träger für Rh-haltige Verbindungen sind ZrO₂, TiO₂ und Hydrotalcite. Der Rh-Gehalt dieser Katalysatoren beträgt vorzugsweise 0,1 bis 10 Gew.-%, vorzugsweise 0,5 bis 5 Gew.-%. Besonders bevorzugt enthalten Rh-haltige Katalysatoren neben Rh auch CeO₂. Der Anteil an CeO₂ beträgt bevorzugt 5 bis 50 Gew.-%, insbesondere 10 bis 30 Gew.-%.

Bevorzugte Träger für Co-haltige Verbindungen sind Zeolithe oder die bevorzugten Träger enthalten Magnesiumoxid. Im Falle von Zeolithen besonders bevorzugt sind Sireiche Strukturtypen, wie MFI, BEA, FER, MEL oder MOR. Die Herstellung solcher Codotierter Zeolithe ist dem Fachmann bekannt. Im Falle von Magnesiumoxid-Trägern kann es sich um reines MgO handeln oder um MgO-haltige Verbindungen wie z.B. Hydrotalcite. Solche Katalysatoren sind bspw. in Appl. Catal. B: Environmental 7 (1996) 397-406 oder Appl. Catal. B: Environmental 13 (1997) 69-79 beschrieben.

Besonders bevorzugt sind Katalysatoren, die im Wesentlichen aus mindestens einer oxidischen Magnesiumverbindung und mindestens einer oxidischen Kobaltverbindung, wobei der Gehalt an oxidischen Kobaltverbindungen im Bereich von 0,1 bis 50 Gew.-% und der Gehalt an oxidischen Magnesiumverbindungen im Bereich von 50 bis 99,9 Gew.-%, jeweils bezogen auf die Gesamtmasse des Katalysators, liegt und mindestens 30 Gew.-% der im Katalysator enthaltenen Co-Atome im chemisch dreiwertigen Zustand vorliegen. Derartige Katalysatoren und deren Herstellung sind in EP 1 257 347 B1 beschrieben.

Weiterhin besonders bevorzugt bei Verwendung oxidischer Co-Verbindungen als aktiver Komponente sind Katalysatoren mit einem Träger, der zu mindestens 50 Gew.-% aus MgO besteht oder aus einem Mischoxid, welches zu mindestens 50 Gew.-% aus MgO besteht, und wobei auf den Träger eine Ceroxid-Funktionsschicht aufgebracht ist. Solche Katalysatoren und deren Herstellung werden in DE 10 2007 038 711 A1 beschrieben.

Der DeN₂O-Katalysator kann als Formkörper beliebiger Größe und Geometrie vorliegen, bevorzugt in Geometrien, die ein großes Verhältnis von Oberfläche zu Volumen aufweisen und bei deren Durchströmung ein möglichst geringer Druckverlust erzeugt wird. Typisch sind alle in der Katalyse bekannten Geometrien, wie z.B. Zylinder, Hohlzylinder, Mehrlochzylinder, Ringe, Granulatbruch, Trilobes oder Wabenstrukturen. Die Größe der eingesetzten Katalysatorpartikel bzw. -formkörper kann in weiten Bereichen schwanken. Typischerweise weisen diese Äquivalenzdurchmesser im Bereich von 1 bis 10 mm auf. Bevorzugt sind Äquivalenzdurchmesser von 1 bis 4 mm auf. Der Äquivalenzdurchmesser ist dabei der Durchmesser einer volumengleichen Kugel.

Die Erfindung betrifft ebenfalls ein Verfahren zur Minderung des Gehalts von NO_{X} und N₂O in Gasen, insbesondere in Prozessgasen und Abgasen, umfassend die Maßnahmen:
a) Zugabe von Stickstoff enthaltendem Reduktionsmittel zu einem N₂O und NO_{X} enthaltenden Gasstrom zur Reduktion des NO_{X},
b) Leiten des N₂O, NO_{X} und Reduktionsmittel enthaltenden Gasstromes durch mindestens ein Katalysatorbett einer DeNO_{X}-Stufe (7), das einen Katalysator für die Reduktion des NO_{X} durch das Reduktionsmittel enthält, welcher mit Übergangsmetallen, einschließlich der Lanthaniden, dotierte Zeolithe enthält, und
c) Leiten des aus der DeNOx-Stufe austretenden Gasstromes durch mindestens ein Katalysatorbett einer DeN₂O-Stufe (8), das einen Katalysator für die Zersetzung des N₂O in N₂ und O₂ enthält, der ausgewählt wird aus der Gruppe der Katalysatoren enthaltend eine oder mehrere katalytische aktive Verbindungen von Elementen ausgewählt aus den Gruppen 5 bis 11 des Periodensystems der Elemente mit Ausnahme der mit Eisen dotierten Zeolithe.

Im Bereich vor dem Eintritt des Gases in den Reaktor bis direkt vor dem Katalysatorbett der (ersten) DeNO_{X}-Stufe wird das NO_{X} und N₂O enthaltende Gas mit einem Stickstoff enthaltenden Reduktionsmittel für NO_{X} gemischt. Dabei kann es sich um jedwedes Stickstoff enthaltende Reduktionsmittel handeln, das dem Fachmann bekannt ist und eine hohe Aktivität zur Reduktion von NO_{X} aufweist.

Beispiele sind Azane, Hydroxylderivate von Azanen sowie Amine, Oxime, Carbamate, Harnstoff oder Harnstoffderivate. Beispiele für Azane sind Hydrazin und ganz besonders Ammoniak. Ein Beispiel für ein Hydroxylderivat von Azanen ist Hydroxylamin. Beispiele für Amine sind primäre aliphatische Amine, wie Methylamin. Ein Beispiel für Carbamate ist Ammoniumcarbamat. Beispiele für Harnstoffderivate sind N,N'-substituierte Harnstoffe, wie N,N'-Dimethylharnstoff. Harnstoffe und Harnstoffderivate werden vorzugsweise in Form von wässrigen Lösungen eingesetzt.

Besonders bevorzugt wird Ammoniak als Reduktionsmittel für NO_{X} eingesetzt.

Das Reduktionsmittel wird in solchen Mengen zugesetzt, wie zur Reduktion mindestens eines Teils des NO_{X} in der DeNOx-Stufe benötigt wird. Der Abbaugrad an NO_{X} sollte dabei im erfindungsgemäßen Verfahren bezogen auf die Eintrittskonzentration an NO_{X} üblicherweise mehr als 70%, bevorzugt mehr als 80%, besonders bevorzugt mehr als 90% insbesondere mehr als 95% betragen.

Bei der Auswahl der Menge des Reduktionsmittels ist darauf zu achten, dass dieses vollständig oder nahezu vollständig in der DeNO_{X}-Stufe umgesetzt wird, so dass möglichst kein Schlupf des Reduktionsmittels aus der DeNO_{X}-Stufe in die DeN₂O-Stufe oder ein Schlupf von kleiner als 25 ppmv, vorzugsweise von kleiner als 10 ppmv und insbesondere ein Schlupf von kleiner als 5 ppmv resultiert. Die dafür benötigten Mengen an Reduktionsmittel sind von der Art des Reduktionsmittels sowie der Menge und Art des Katalysators und sonstigen Betriebsparameter wie Druck und Temperatur abhängig.

Im Falle von Ammoniak als Reduktionsmittel für NO_{X} wird üblicherweise eine solche Menge an NH₃ zugegeben, dass bezogen auf die Komponenten NH₃ und NO_{X} am Eintritt der DeNO_{X}-Stufe ein molares NH₃/NO_{X}-Verhältnis von 0,8 bis 3, vorzugsweise von 1 bis 2,5, besonders bevorzugt von 1,2 bis 2 und insbesondere von 1,3 bis 1,8 resultiert.

Die Menge an Reduktionsmittel für NO_{X} kann auf unterschiedliche Weise ermittelt und bemessen werden. Beispielsweise kann über die Messstelle G) am Autritt der DeN₂O-Stufe der NO_{X}-Gehalt gemessen werden und über eine einfache Regelung, d.h. über die Regeleinheit H) die Stellvorrichtung I) zur Dosierung des Reduktionsmittels so gesteuert werden, dass sich am Austritt der DeN₂O-Stufe der gewünschte NO_{X}-Gehalt (Sollwert) einstellt.

Dieser Regelstrategie sind im erfindungsgemäßen Verfahren Grenzen gesetzt, nämlich immer dann, wenn der NO_{X}-Gehalt in der DeNOx-Stufe vollständig reduziert werden soll, so dass die Messtelle G) am Austritt der DeN₂O-Stufe keine signifikante Messgröße und damit Regelgröße liefert.

In einer bevorzugten Ausführung wird daher der NO_{X}-Gehalt und der Fluss des Abgases, d.h. dessen Menge vor Eintritt in die deNOx-Stufe gemessen und aus diesen Größen über eine Steuereinheit H) unter Vorgabe eines geeigneten Verhältnisses der Mengen von Reduktionsmittel und NO_{X} die benötige Menge an Reduktionsmittel ermittelt und die Stellvorrichtung I) entsprechend gestellt.

Das geeignete Verhältnis der Mengen an Reduktionsmittel und NO_{X} kann durch Kalibrierung der erfindungsgemäßen Vorrichtung ermittelt werden. Entsprechende Werte für das molare Verhältnis im Falle von NH₃ als Reduktionsmittel finden sich oberhalb angegeben.In der DeNO_{X}-Stufe liegt die Temperatur beim erfindungsgemäßen Verfahren üblicherweise zwischen 300 und 600°C, vorzugsweise zwischen 350 und 550°C, und besonders bevorzugt zwischen 400 und 550°C.

Die DeNO_{X}-Stufe kann erfindungsgemäß bei Normaldruck oder vorzugsweise bei Überdruck betrieben werden. Typischerweise bewegt sich der Druck in dieser Stufe im Bereich von 1 bis 50 bara, vorzugsweise von 1 bis 25 bara, besonders bevorzugt von 4 bis 15 bara. Dabei verringert ein höherer Betriebsdruck in der DeNO_{X}-Stufe die zur NO_{X}-Reduktion benötigte Menge an Katalysator. Ein erhöhter Druck bei ansonsten gleichen Betriebsparametern führt im Allgemeinen zu einem erhöhten Abbaugrad an NO_{X} am Ausgang der DeNO_{X}-Stufe.

Die Katalysatormenge in der DeNO_{X}-Stufe muss so bemessen sein, dass bei entsprechender Zugabe an Reduktionsmittel, wie oberhalb dargelegt, der gewünschte Abbaugrad an NO_{X} erreicht werden kann und zwar möglichst ohne Auftreten eines Schlupfs an Reduktionsmittel.

Die Menge an Katalysator ist dabei abhängig von den vorliegenden Betriebsparametern der DeNO_{X}-Stufe, wie dem Volumenstrom des Gases, dem Betriebsdruck und der Betriebstemperatur. Typische Raumgeschwindigkeiten in der DeNO_{X}-Stufe bewegen sich im Bereich zwischen 5.000 und 200.000 h⁻¹, bevorzugt zwischen 10.000 und 100.000 h⁻¹, und besonders bevorzugt zwischen 20.000 und 60.000 h⁻¹. Dabei wird im Rahmen dieser Beschreibung unter dem Begriff Raumgeschwindigkeit der Quotient aus Volumenanteilen Gasgemisch (gemessen bei 273,15 K und 1,01325 bara) pro Stunde bezogen auf einen Volumenanteil Katalysator verstanden. Die Raumgeschwindigkeit kann somit über den Volumenstrom des Gases und/oder über die Katalysatormenge eingestellt werden.

Erfindungsgemäß werden die Verfahrensparameter in der DeNO_{X}-Stufe, also Raumgeschwindigkeit, Temperatur und Druck, im Rahmen der oben angegebenen Bereiche für diese Verfahrensparameter so gewählt, dass für ein Gas mit gegebenem NO_{X}-Gehalt bei entsprechender Zugabe an Reduktionsmittel für NO_{X} am Ausgang der DeN₂O-Stufe ein Restgehalt an NO_{X} von kleiner als 150 ppmv, vorzugsweise kleiner als 100 ppmv, besonders bevorzugt kleiner als 50 ppmv, ganz besonders bevorzugt kleiner als 20 ppmv, insbesondere bevorzugt kleiner als 10 ppmv, und äußerst bevorzugt kleiner als 1 ppmv resultiert.

In der DeN₂O-Stufe liegt die Temperatur beim erfindungsgemäßen Verfahren üblicherweise ebenfalls zwischen 300 und 600°C, vorzugsweise zwischen 350 und 550°C und besonders bevorzugt zwischen 400 und 550°C. Die Temperatur in der DeN₂O-Stufe wird im Allgemeinen so gewählt, dass sie sich nicht mehr als um 50°C, vorzugsweise nicht mehr als um 20°C von der in der DeNO_{X}-Stufe herrschenden Temperatur unterscheidet. Als Temperatur der jeweiligen Stufe wird die Temperatur des Gasstromes unmittelbar am Eingang der betreffenden Stufe angesehen.

Auch die DeN₂O-Stufe kann erfindungsgemäß bei Normaldruck oder vorzugsweise bei Überdruck betrieben werden. Typischerweise bewegt sich der Druck in dieser Stufe im Bereich von 1 bis 50 bara, vorzugsweise von 1 bis 25 bara, besonders bevorzugt von 4 bis 15 bara. Dabei verringert ein höherer Betriebsdruck in der DeN₂O-Stufe die zur N₂O-Zersetzung benötigte Menge an Katalysator.

Die Katalysatormenge in der DeN₂O-Stufe wird so bemessen, dass der gewünschte Abbaugrad an N₂O erreicht werden kann.

Das Reaktorbett der DeN₂O-Stufe wird vorzugsweise so mit Katalysator befüllt, dass - bezogen auf den eintretenden Gasstrom - eine Raumgeschwindigkeit zwischen 2.000 und 50.000 h⁻¹, bevorzugt eine Raumgeschwindigkeit zwischen 2.500 und 25.000 h⁻¹, und besonders bevorzugt eine Raumgeschwindigkeit von zwischen 3.000 und 20.000 h⁻¹ resultiert. Die Raumgeschwindigkeit kann, wie bei der Reduktion des NO_{X} beschrieben, über den Volumenstrom des Gases und/oder über die Katalysatormenge eingestellt werden.

Im erfindungsgemäßen Verfahren werden der Grad der NO_{X}-Reduktion in der DeNO_{X}-Stufe sowie die Verfahrensparameter in der DeN₂O-Stufe, also Raumgeschwindigkeit, Temperatur und Druck, im Rahmen der oben angegebenen Bereiche für diese Verfahrensparameter so gewählt, dass für ein Gas mit gegebenem Gehalt an N₂O am Eingang der DeN₂O-Stufe(n) eine Verringerung des N₂O-Gehalts bis auf Werte von kleiner als 100 ppmv, vorzugsweise kleiner als 50 ppmv, besonders bevorzugt kleiner als 30 ppmv und ganz besonders bevorzugt von kleiner als 15 ppmv resultiert. Insgesamt soll ein möglichst weitgehender Abbau des N₂O stattfinden.

Figuren 1 bis 6 beschreiben bevorzugte Ausführungsformen der erfindungsgemäßen Vorrichtung und des erfindungsgemäßen Verfahrens.

Figur 1 stellt eine erfindungsgemäße Vorrichtung im Längsschnitt dar, bei der die beiden Katalysatorbetten in der Form von zwei ineinandergestellten Hohlzylindern ausgestaltet sind. Der Reaktor besteht aus dem Behälter (1), ausgestattet mit Einlass (11) und Auslass (12) für das Gas. Das zu reinigende und Stickoxide enthaltende Gas (2) wird dem Reaktor zusammen mit einem Reduktionsmittel für NO_{X} (3), beispielsweise Ammoniak, einem im Einlass (11) angebrachten Mischer (4) über nicht dargestellte Leitungen zugeführt. Diesen verlässt das Gasgemisch als Eingangsstrom (5), in dem das Stickoxide enthaltende Gas sowie das gasförmige Reduktionsmittel für NO_{X} homogen miteinander vermischt sind. Der Eingangsstrom (5) wird aus dem Mischer (4) in den Eingangsraum (6) des Reaktors geleitet und durchströmt von dort aus ein DeNO_{X}-Katalysatorbett (7) und sodann ein DeN₂O-Katalysatorbett (8). Diese Katalysatorbetten sind in einem Radialkorb in der Form von zwei ineinander liegenden Schüttungen angeordnet und bilden jeweils einen Hohlzylinder aus. Die innere Mantelfläche des äußeren Hohlzylinders grenzt dabei direkt an die äußere Mantelfläche des inneren Hohlzylinders. Der innere Hohlzylinder bildet im Innern einen Hohlraum aus, der den Ausgangsraum (9) für das gereinigte Gas (10) bildet. Dieses tritt nach Durchlaufen des Ausgangsraumes (9) durch den Auslass (12) aus dem Reaktor aus. Zur Strömungsleitung sind die beiden Katalysatorbetten (7, 8) an ihrer Oberseite mit einem gasundurchlässigen Deckel (13) versehen. Die übrigen Wände (15) des Radialkorbes sind gasdurchlässig und z.B. als Drahtgeflecht ausgeführt. Die Unterseite (14) des Radialkorbes trägt die Katalysatorbetten und ist gasundurchlässig ausgestaltet, beispielsweise als geschlossene Platte.

Figur 2 stellt eine erfindungsgemäße Vorrichtung im Längsschnitt dar, bei der die beiden Katalysatorbetten in der Form von zwei ineinandergestellten Hohlzylindern ausgestaltet sind. Der Aufbau dieser Vorrichtung ist ähnlich dem Aufbau des Reaktors aus Figur 1. Nur strömt hier das zu reinigende Gas in entgegengesetzter Richtung von innen nach außen durch die Katalysatorbetten. Der Reaktor besteht auch hier aus dem Behälter (1), der mit Einlass (11) und Auslass (12) für das Gas ausgestattet ist. Das zu reinigende und Stickoxide enthaltende Gas (2) wird dem Reaktor zusammen mit einem Reduktionsmittel für NO_{X} (3), beispielsweise Ammoniak, einem im Einlass (11) angebrachten Mischer (4) über nicht dargestellte Leitungen zugeführt. Diesen verlässt das Gasgemisch als Eingangsstrom (5), in dem das Stickoxide enthaltende Gas sowie das Reduktionsmittel für NO_{X} homogen miteinander vermischt sind. Der Eingangsstrom (5) wird aus dem Mischer (4) in den Eingangsraum (6) des Reaktors geleitet. Dieser endet in dieser Ausführungsform im inneren Hohlraum des vom inneren Katalysatorbett gebildeten Hohlzylinders. Vom Eingangsraum (6) durchströmt der zu reinigende Gasstrom (5) ein DeNOx-Katalysatorbett (7) und sodann ein DeN₂O-Katalysatorbett (8). Diese Katalysatorbetten sind auch bei dieser Ausführungsform in einem Radialkorb in der Form von zwei ineinander liegenden Schüttungen angeordnet und bilden jeweils einen Hohlzylinder aus. Auch hier grenzt die innere Mantelfläche des äußeren Hohlzylinders direkt an die äußere Mantelfläche des inneren Hohlzylinders. In der vorliegenden Ausführungsform durchströmt das zu reinigende Gas die beiden Katalysatorbetten radial von innen nach außen. Der Ausgangsraum (9) für das gereinigte Gas (10) beginnt hier an der äußeren Mantelfläche des DeN₂O-Katalysatorbettes (8). Nach Durchlaufen des Ausgangsraumes (9) tritt das gereinigte Gas (10) durch den Auslass (12) aus dem Reaktor aus. Zur Strömungsleitung sind die beiden Katalysatorbetten (7, 8) an ihrer Oberseite hier ebenfalls mit einem gasundurchlässigen Deckel (13) versehen; dieser muss allerdings im Zentrum eine Öffnung für die Durchleitung des Eingangstromes (5) ausgestattet sein. Die übrigen Wände (15) des Radialkorbes sind gasdurchlässig und z.B. als Drahtgeflecht ausgeführt. Die Unterseite des Radialkorbes (14) muss gasundurchlässig ausgestaltet sein, um die gewünschte Durchströmung der Katalysatorbetten zu gewährleisten.

In Figur 3 wird eine erfindungsgemäße Vorrichtung im Längsschnitt beschrieben, in der zwei Katalysatorbetten von dem zu reinigenden Gas zuerst axial und sodann radial durchflossen werden. Der Reaktor besteht aus dem Behälter (1), ausgestattet mit Einlass (11) und Auslass (12) für das Gas. Das zu reinigende und Stickoxide enthaltende Gas (2) wird dem Reaktor zusammen mit einem Reduktionsmittel für NO_{X} (3), beispielsweise Ammoniak, einem im Einlass (11) angebrachten Mischer (4) über nicht dargestellte Leitungen zugeführt. Diesen verlässt das Gasgemisch als Eingangsstrom (5), in dem das Stickoxide enthaltende Gas sowie das Reduktionsmittel für NO_{X} homogen miteinander vermischt sind. Der Eingangsstrom (5) wird aus dem Mischer (4) in den Eingangsraum (6) des Reaktors geleitet und durchströmt von dort aus in axialer Richtung ein DeNOx-Katalysatorbett (7), welches als horizontale Schüttung zwischen zwei gasdurchlässigen Böden (15) aufgebracht ist. Nach Durchströmung des NO_{X}-Katalysatorbettes (7) strömt das von NO_{X} gereinigte Gas in einen Zwischenraum (16), der in einen inneren Hohlraum (17) mündet, welcher von einem zylinderförmigen DeN₂O-Katalysatorbett (8) umschlossen ist. Zur Strömungsleitung ist das Katalysatorbett (8) an seiner Oberseite mit einem gasundurchlässigen Deckel (13) versehen, welcher an die Wand des Behälters (1) anschließt. Das zu reinigende Gas strömt vom Hohlraum (17) radial nach außen durch das DeN₂O-Katalysatorbett (8) und tritt an der äußeren Mantelfläche des Zylinders in den Ausgangsraum (9) für das gereinigte Gas (10) aus. Nach Durchlaufen des Ausgangsraumes (9) tritt das gereinigte Gas (10) durch den Auslass (12) aus dem Reaktor aus. Um die gewünschte Durchströmung des Kataysatorbettes (8) zu gewährleisten, ist die Unterseite des Radialkorbes (14) gasundurchlässig ausgestaltet.

Figur 4 stellt eine erfindungsgemäße Vorrichtung im Längsschnitt dar, bei der die beiden Katalysatorbetten in der Form von zwei horizontal angeordneten Schüttungen ausgestaltet sind. Der Aufbau dieser Vorrichtung ist ähnlich dem Aufbau des Reaktors aus Figur 2. Nur strömt hier das zu reinigende Gas in axialer Weise durch zwei hintereinander geschaltete Katalysatorbetten (7, 8). Der Reaktor besteht auch hier aus dem Behälter (1), ausgestattet mit Einlass (11) und Auslass (12) für das Gas. Das zu reinigende und Stickoxide enthaltende Gas (2) wird dem Reaktor zusammen mit einem Reduktionsmittel für NO_{X} (3), beispielsweise Ammoniak, einem im Einlass (11) angebrachten Mischer (4) über nicht dargestellte Leitungen zugeführt. Diesen verlässt das Gasgemisch als Eingangsstrom (5), in dem das Stickoxide enthaltende Gas sowie das Reduktionsmittel für NO_{X} homogen miteinander vermischt sind. Der Eingangsstrom (5) wird aus dem Mischer (4) in den Eingangsraum (6) des Reaktors geleitet und durchströmt von dort aus in axialer Richtung ein DeNOx-Katalysatorbett (7) sowie ein direkt sich daran anschließendes DeN₂O-Katalysatorbett (8), welche jeweils als horizontale Schüttung zwischen gasdurchlässigen Böden (15) aufgebracht sind. Das gereinigte Gas (10) tritt an der unteren Seite des DeN₂O-Katalysatorbettes (8) in den Ausgangsraum (9) aus. Nach Durchlaufen des Ausgangsraumes (9) tritt das gereinigte Gas (10) durch den Auslass (12) aus dem Reaktor aus.

Figur 5a stellt eine erfindungsgemäße Vorrichtung im Längsschnitt dar, bei der das DeNOx-Katalysatorbett (7) als horizontale Schüttung vorliegt und mehrere DeN₂O-Katalysatorbetten (8) in der Form von vertikal angeordneten Schüttungen vorliegen. Der Reaktor besteht aus dem Behälter (1), ausgestattet mit Einlass (11) und Auslass (12) für das Gas. Das zu reinigende und Stickoxide enthaltende Gas (2) wird dem Reaktor zusammen mit einem Reduktionsmittel für NO_{X} (3), beispielsweise Ammoniak, einem im Einlass (11) angebrachten Mischer (4) über nicht dargestellte Leitungen zugeführt. Diesen verlässt das Gasgemisch als Eingangsstrom (5), in dem das Stickoxide enthaltende Gas sowie das Reduktionsmittel für NO_{X} homogen miteinander vermischt sind. Der Eingangsstrom (5) wird aus dem Mischer (4) in den Eingangsraum (6) des Reaktors geleitet und durchströmt von dort aus in axialer Richtung ein DeNO_{X}-Katalysatorbett (7), welches von gasdurchlässige Böden (15) gehalten bzw. begrenzt wird. Nach Durchströmung des DeNO_{X}-Katalysatorbettes (7) strömt das von NO_{X} gereinigte Gas in einen Zwischenraum (16) und von dort durch eine Anordnung (18) von mehreren in Figur 5a nicht näher dargestellten vertikalen DeN₂O-Katalysatorbetten (8). Anordnung (18) weist einen rechteckigen Querschnitt auf und ist an der Ober- und Unterseite mit Halterungen (19) mit dem Mantel des Behälters (1) verbunden. Das von NO_{X} gereinigte Gas strömt von oben nach unten durch die Anordnung (18), wobei das im Gas enthaltene N₂O in Stickstoff und Sauerstoff zersetzt wird. Das gereinigte Gas (10) tritt an der unteren Stirnseite der Anordnung (18) in den Ausgangsraum (9) aus und verlässt den Reaktor durch den Auslass (12).

Im oberen Teil der Figur 5b ist ein Schnitt der Anordnung (18) entlang Linie A dargestellt. Anordnung (18) befindet sich innerhalb des Behälters (1) und bildet einen Quader aus, der von Blechen (20) umschlossen wird. Der Innenraum des Quaders wird von einer Abfolge von vertikal angeordneten, unmittelbar aneinander grenzenden Raumabschnitten (8, 9, 17) gebildet. Diese Raumabschnitte werden jeweils von gasdurchlässigen Wänden (15), beispielsweise aus Drahtgeflechten, begrenzt. Bei Raumabschnitten (8) handelt es sich um mehrere DeN₂O-Katalysatorbetten, die innerhalb der Anordnung (18) vertikal verlaufen. Bei Raumabschnitten (9) handelt es sich um Ausgangsräume für das gereinigte Gas (10). Bei Raumabschnitten (17) handelt es sich um Eintrittsräume für das von NO_{X} gereinigte Gas.

Im unteren Teil von Figur 5b ist die Anordnung (18) im Längsschnitt dargestellt, zusammen mit einem Strömungsprofil für das Gas. Das von NO_{X} gereinigte Gas tritt von der Oberseite der Anordnung (18) durch die Eintrittsräume (17) in die vertikal verlaufenden DeN₂O-Katalysatorbetten (8) ein und wird dort von N₂O gereinigt. Danach tritt das gereinigte Gas (10) in die Ausgangsräume (9) aus und verlässt sodann den Reaktor. Zur Stromleitung sind auf der oberen Stirnseite der Anordnung (18) gasundurchlässige Bleche (22) angebracht, welche dem von NO_{X} gereinigten Gas nur den Zutritt in die Eintrittsräume (17) nicht jedoch in die Stirnseiten der DeN₂O-Katalysatorbetten (8) oder in die Ausgangsräume (9) gestatten. Zur Stromleitung sind auf der unteren Stirnseite der Anordnung (18) gasundurchlässige Bleche (23) angebracht, welche dem gereinigten Gas (10) nur den Austritt über die Ausgangsräume (9) nicht jedoch über die Stirnseiten der DeN₂O-Katalysatorbetten (8) und nicht in die Eintrittsräume (17) gestatten.

Figur 6a stellt eine erfindungsgemäße Vorrichtung im Längsschnitt dar, bei der die beiden Katalysatorbetten in der Form von mehreren jeweils vertikal angeordneten Schüttungen ausgestaltet sind. Der Aufbau dieser Vorrichtung ist ähnlich dem Aufbau des Reaktors aus Figur 5a. Nur strömt hier das zu reinigende Gas in axialer Weise durch jeweils zwei hintereinander geschaltete und jeweils vertikal angeordnete Katalysatorbetten (in Figur 6a nicht näher dargestellt). Der Reaktor besteht auch hier aus dem Behälter (1), ausgestattet mit Einlass (11) und Auslass (12) für das Gas. Das zu reinigende und Stickoxide enthaltende Gas (2) wird dem Reaktor zusammen mit einem Reduktionsmittel für NO_{X} (3), beispielsweise Ammoniak, einem im Einlass (11) angebrachten Mischer (4) über nicht dargestellte Leitungen zugeführt. Diesen verlässt das Gasgemisch als Eingangsstrom (5), in dem das Stickoxide enthaltende Gas sowie das Reduktionsmittel für NO_{X} homogen miteinander vermischt sind. Der Eingangsstrom (5) wird aus dem Mischer (4) in den Eingangsraum (6) des Reaktors geleitet und durchströmt von dort aus eine Anordnung (18) von mehreren in Figur 6a nicht näher dargestellten Kombinationen von vertikalen DeNO_{X}- und DeN₂O-Katalysatorbetten (7, 8). Anordnung (18) weist einen rechteckigen Querschnitt auf und ist an der Ober- und Unterseite mit Halterungen (19) mit dem Mantel des Behälters (1) verbunden. Das zu reinigende Gas strömt von oben nach unten durch die Anordnung (18), wobei die im Gas enthaltenen Stickoxide entfernt werden. Das gereinigte Gas (10) und tritt an der unteren Stirnseite der Anordnung (18) in den Ausgangsraum (9) aus und verlässt den Reaktor durch den Auslass (12).

In Figur 6b ist eine Verschaltung der Anordnung (18) im Längsschnitt dargestellt zusammen mit einem Strömungsprofil für das Gas. Das zu reinigende Gas tritt von der Oberseite der Anordnung (18) durch die Eintrittsräume (6) in die DeNO_{X}-Katalysatorbetten (7) ein und wird dort von NO_{X} gereinigt. Von jedem DeNOx-Katalysatorbett (7) tritt das Gas direkt in ein DeN₂O-Katalysatorbett (8) über, wo das im Gas verbliebene N₂O in Stickstoff und Sauerstoff zersetzt wird. Danach tritt das gereinigte Gas (10) in die Ausgangsräume (9) aus und verlässt sodann den Reaktor. Die Katalysatorbetten (7, 8) sind jeweils zu direkt aneinander grenzenden Paaren zusammengefasst, die innerhalb der Anordnung (18) vertikal verlaufen und deren Längsseiten - über welche auch der Gasaustausch erfolgt - in direktem Kontakt zueinander stehen. Zur Stromleitung sind auf der oberen Stirnseite der Anordnung (18) gasundurchlässige Bleche (22) angebracht, welche dem zu reinigenden Gas nur den Zutritt in die Eintrittsräume (6) nicht jedoch in die Stirnseiten der Katalysatorbetten (7, 8) oder in die Ausgangsräume (9) gestatten. Zur Stromleitung sind auf der unteren Stirnseite der Anordnung (18) gasundurchlässige Bleche (23) angebracht, welche dem gereinigten Gas (10) nur den Austritt über die Ausgangsräume (9) nicht jedoch über die Stirnseiten der Katalysatorbetten (7, 8) und nicht in die Eintrittsräume (6) gestatten. Die Katalysatorbetten (7, 8) werden seitlich von gasdurchlässigen Wänden (15) begrenzt, die z.B. als Drahtgeflecht ausgeführt sind.

In Figur 6c ist eine alternative Verschaltung der Anordnung (18) im Längsschnitt dargestellt zusammen mit einem Strömungsprofil für das Gas. Das zu reinigende Gas tritt von der Oberseite der Anordnung (18) durch die Eintrittsräume (6) in die DeNO_{X}-Katalysatorbetten (7) ein und wird dort von NO_{X} gereinigt. Von jedem DeNO_{X}-Katalysatorbett (7) tritt das Gas in einen Zwischenraum (25) aus und wird dann in ein DeN₂O-Katalysatorbett (8) geleitet, wo das im Gas verbliebene N₂O in Stickstoff und Sauerstoff zersetzt wird. Danach tritt das gereinigte Gas (10) in die Ausgangsräume (9) aus und verlässt sodann den Reaktor. Die Katalysatorbetten (7, 8) sind jeweils zu direkt aneinander grenzenden Paaren zusammengefasst, die innerhalb der Anordnung (18) vertikal verlaufen und deren Stirnseiten - über welche kein Gasaustausch erfolgt - in direktem Kontakt zueinander stehen. Zur Stromleitung sind auf der oberen Stirnseite der Anordnung (18) gasundurchlässige Bleche (22) angebracht, welche dem zu reinigenden Gas nur den Zutritt in die Eintrittsräume (6) nicht jedoch in die Stirnseiten der Katalysatorbetten (7), nicht in die Zwischenräume (25) und nicht in die Ausgangsräume (9) gestatten. Zur Stromleitung sind auf der unteren Stirnseite der Anordnung (18) gasundurchlässige Bleche (23) angebracht, welche dem gereinigten Gas (10) nur den Austritt über die Ausgangsräume (9) nicht jedoch über die Stirnseiten der Katalysatorbetten (8), nicht in die Zwischenräume (25) und nicht in die Eintrittsräume (6) gestatten. Außerdem sind zur Stromleitung in der Mitte der Anordnung (18) zwischen den Stirnseiten der Katalysatorbetten (7, 8) sowie zwischen den Eintrittsräumen (6) und den Ausgangsräumen (9) gasundurchlässige Bleche (24) angebracht, welche dem zu reinigenden Gas nur den Übertritt von den DeNO_{X}-Katalysatorbetten (7) in die Zwischenräume (25) und von dort aus in die DeN₂O-Katalysatorbetten (8) gestatten nicht jedoch den direkten Übertritt des Gases von den Eintrittsräumen (6) in die Ausgangsräume (9). Die Katalysatorbetten (7, 8) werden seitlich von gasdurchlässigen Wänden (15) begrenzt, die z.B. als Drahtgeflecht ausgeführt sind.

Die nachfolgenden Versuche und Ausführungsbeispiele erläutern das erfindungsgemäße Verfahren und die erfindungsgemäße Vorrichtung bzw. einzelne Elemente daraus ohne dass dadurch eine Beschränkung beabsichtigt ist.

### Versuche 1 bis 3: Reduktion von NO_{X} mittels NH₃ über Eisen-Zeolith-Katalysatoren bei unterschiedlichen Temperaturen

Versuche 1 bis 3, deren Ergebnisse in den Abbildungen 1 bis 3 wiedergegeben sind, demonstrieren am Beispiel eines mit Eisen dotierten Zeolith-Katalysators die einzigartige Wirkung der erfindungsgemäßen DeNOx-Stufe bzw. der darin verwendeten Katalysatoren zur NO_{X}-Reduktion im Temperaturbereich von 360 bis 500°C. Bei den in den Versuchen 1 bis 3 eingesetzten Katalysatoren handelte es sich um mit Eisenbeladene Zeolithe vom Typ ZSM-5, welche durch Festköper-Ionenaustausch ausgehend von ZSM-5-Zeolith-Pulver in Ammonium-Form hergestellt worden waren. Detaillierte Angaben zur Präparation können aus M. Rauscher, K. Kesore, R. Mönnig, W. Schwieger, A. Tißler, T. Turek: "Preparation of highly active Fe-ZSM-5 catalyst through solid state ion exchange for the catalytic decomposition of N2O" in Appl. Catal. 184 (1999) 249-256 entnommen werden. Das erhaltene Katalysatorpulver wurde 6 h bei 823 K an der Luft kalziniert, gewaschen und über Nacht bei 383 K getrocknet. Nach Zusatz entsprechender Binder folgte die Extrusion zu zylindrischen Katalysatorkörpern.

Die Katalysatorpellets wurden in einen Rohrreaktor einer Versuchsanlage eingebracht, die an ein reales Abgas einer Salpetersäureanlage angeschlossen war. Die

Betriebstemperatur in den Reaktionszonen wurde durch Beheizung eingestellt. Die Analyse der in den Reaktor ein- und austretenden Gasströme erfolgte mit Hilfe eines FTIR-Gasanalysators (Fa. Ansyco) bzw. mit einer paramagnetischen Messung für den Sauerstoffgehalt.

Die genauen Versuchs- bzw. Betriebsbedingungen sind der nachstehenden Tabelle 1 zu entnehmen.

**Tabelle 1: Betriebsbedingungen zu den Versuchen 1 bis 3**

| **Versuch** | | | **1** | **2** | **3** |
|---|---|---|---|---|---|
| Prozessparameter | T | °C | 360 | 430 | 500 |
| | RG^{*)} | h⁻¹ | 30.000 | 40.000 | 50.000 |
| | P | bara | 6,5 | 6,5 | 6,5 |
| Abgaszusammensetzung am Eintritt in den Versuchsreaktor | NO_{X} | ppmv | 500 | 525 | 520 |
| | N₂O | ppmv | 745 | 715 | 980 |
| | H₂O | Vol.% | 0,32 | 0,34 | 0,36 |
| | O₂ | Vol.% | 0,74 | 0,74 | 0,48 |

| | | | | | |
|---|---|---|---|---|---|
| ^{*)} RG = Raumgeschwindigkeit | | | | | |

Die Ergebnisse der Versuche 1 bis 3 sind in den Abbildungen 1 bis 3 wiedergegeben. Die Legende aus Abbildung 1 gilt in gleicher Weise für Abbildungen 2 und 3. Die Bezeichung "aus" in der Legende bezeichnet jeweils die Konzentration am Austritt aus dem Reaktor. Wie zu erkennen, kann das Reduktionsmittel NH₃ zur vollständigen Reduktion des NO_{X} problemlos auch in weit überstöchio-metrische Mengen dosiert werden, ohne dass ein NH₃ Schlupf auftritt.

### Versuche 4 und 5: Inhibierende Wirkung von NO_{X} auf die katalytische Zersetzung von N₂O bei einem NO_{X}-sensitiven DeN₂O-Katalysator

Abbildung 4 belegt am Beispiel eines Katalysators, welcher analog zum Ausführungsbeispiel der EP 1 257 347 B1 hergestellt wurde und nach der Temperung ein Massenverhältnis der resultierenden Oxide Co₃O₄:MgO = 3:7 aufwies, die inhibierende Wirkung von NO_{X} auf die katalytische Zersetzung von N₂O. So war unter den gewählten Bedingungen (vergl. nachstehende Tabelle 2) die Temperatur, welche für die Zersetzung von N₂O benötigt wurde, in Gegenwart von 1000 ppmv NO_{X} um ca. 100 K höher als ohne NO_{X}.

**Tabelle 2: Versuchsbedingungen zu den Versuchen 4 und 5**

| Versuch | | 4 | 5 |
|---|---|---|---|
| Kat | | Co₃O₄/MgO | Co₃O₄/MgO |
| RG^{*)} Gaszusammensetzung | h⁻¹ | 10.000 | 10.000 |
| N₂O | ppmv | 2000 | 2000 |
| O₂ | Vol.-% | 2,5 | 2,5 |
| H₂O | Vol.-% | 0,5 | 0,5 |
| NOₓ | ppmv | 0 | 1000 |
| N₂ | | Rest | Rest |

| | | | |
|---|---|---|---|
| ^{*)} RG = Raumgeschwindigkeit | | | |

### Beispiele 1 (erfindungsgemäß) und 2 (Vergleich)

Die Wirkung des erfindungsgemäßen Verfahrens / der erfindungsgemäßen Vorrichtung wird durch die nachstehenden Beispiele veranschaulicht.

In einer Versuchsanlage mit zwei hintereinander geschalteten Rohrreaktoren, welche an ein reales Abgas einer Salpetersäureanlage angeschlossen war, wurde in die erste Stufe ein DeNO_{X}-Katalysator eingebracht und die zweite Stufe ein NO_{X}-sensitiver DeN₂O-Katalysator.

Vor der ersten Stufe erfolgte die Zugabe von NH₃ als Reduktionsmittel für NO_{X}.

Die Analyse der in den Reaktor ein- und austretenden Gasströme erfolgte mit Hilfe eines FTIR-Gasanalysators (Fa. Ansyco) bzw. mit einer paramagnetischen Messung für den Sauerstoffgehalt. Die Betriebstemperatur in den Reaktionsstufen wurde durch Vorheizen des in die Rohrreaktoren eintretenden Gasstromes und durch Beiheizung der Reaktionszone eingestellt.

Als NO_{X}-sensitiver DeN₂O-Katalysator in der DeN₂O-Stufe wurde ein Co₃O₄/MgObasierter Katalysator in Tablettenform eingesetzt, welcher analog zum Ausführungsbeispiel der Patentschrift EP 1 257 347 B1 hergestellt wurde und ein Massenverhältnis der resultierenden Oxide Co₃O₄:MgO von 3:7 aufwies. Die Katalysatormenge wurde so gewählt, dass bezogen auf das Schüttvolumen des DeN₂O-Katalysators eine Raumgeschwindigkeit von 20.000 h⁻¹ resultierte. Die Temperatur der DeN₂O-Stufe betrug 500°C.

In der DeNO_{X}-Stufe kam zum einen (Beispiel 1) ein extrudierter mit Eisen beladener Zeolith vom Typ ZSM-5 zum Einsatz, wie dieser auch schon für die Versuche 1 bis 3 verwendet worden war. Die Katalysatormenge wurde so gewählt, dass bezogen auf das Volumen der Schüttung des Katalysators eine Raumgeschwindigkeit von 50.000 h⁻¹ resultierte. Die Temperatur der DeN₂O-Stufe betrug ebenfalls 500°C.

Zum anderen (Beispiel 2, Vergleich) wurde in der DeNO_{X}-Stufe ein klassischer SCR-Katalysator auf Basis V₂O₅-WO₃/TiO₂ der Firma Ceram in Granulatform verwendet. Hierzu waren entsprechende Vollwaben des Katalysators kleingebrochen worden und nach Absieben des Feinanteils in den Rohrreaktor eingefüllt worden. Die Katalysatormenge wurde dabei so gewählt, dass bezogen auf das Volumen der Schüttung des DeNO_{X}-Katalysators eine Raumgeschwindigkeit von 48.000 h⁻¹ resultierte. Die Temperatur der DeNO_{X}-Stufe wurde auf 260°C geregelt, so dass der austretende Gasstrom in diesem Fall vor Eintritt in die DeN₂O-Stufe wieder aufgeheizt werden musste.

Die genauen Versuchs- bzw. Betriebsbedingungen sind der nachstehenden Tabelle 3 zu entnehmen. Abbildung 5 illustriert die erhalten Versuchsergebnisse.

**Tabelle 3: Versuchsbedingungen für die Beispiele 1 und 2**

| Beispiel | | 1 | | 2 | |
|---|---|---|---|---|---|
| Stufe | | DeNO_{X} | DeN₂O | DeNO_{X} | DeN₂O |
| Kat. | | Fe-ZSM-5 | Co₃O₄/MgO | V₂O₅-WO₃/TiO₂ | Co₃O₄/MgO |
| RG ^{*)} | h⁻¹ | 50.000 | 20.000 | 48.000 | 20.000 |
| T | °C | 500 | 500 | 260 | 500 |

| | | | | | |
|---|---|---|---|---|---|
| ^{*)} RG = Raumgeschwindigkeit | | | | | |

Wie Abbildung 5 zu entnehmen, wird im erfindungsgemäßen Beispiel 1 ein deutlich erhöhter N₂O-Umsatz erzielt als im Vergleichsbeispiel 2. Überraschenderweise ist dabei im erfindungsgemäßen Beipiel 1 verglichen zum Beispiel 2, bei welchem dem Co₃O₄/MgO ein klassischer DeNOₓ-Katalystor auf V₂O₅-WO₃/TiO₂-Basis vorgeschaltet ist, der erzielte N₂O-Abbau außerdem in einem weiten Bereich mehr oder weniger unabhängig vom NO_{X}-Gehalt am Austritt der DeN₂O-Stufe. Das erfindungsgemäße Verfahren bzw. die erfindungsgemäße Vorrichtung ermöglicht so die gleichzeitige Entfernung von N₂O und NO_{X} aus Gasen mit hohen Abbauraten. Im Vergleichsbeispiel ist dies nicht möglich, da hier bei hoher NH₃-Dosierung, d.h. spätestens bei einem Verhältnis von [NH₃]ₑᵢₙ:[NO_{X}]ₐᵤₛ von ≥ 1 ein NH₃-Schlupf aus der DeNOx-Stufe auftritt, welcher in der DeN₂O-Stufe zu einer zumindest partiellen Bildung von NO_{X} führt. Dies wiederum hat nicht nur eine Erhöhung NO_{X}-Austrittskonzentration zur Folge, sondern auch eine Inhibierung des N₂O-Abbaus in der DeN₂O-Stufe und damit ein dramatischen Rückgang des N₂O-Abbaus.

Bevorzugte Ausführungsformen der Erfindung sind nachfolgend als Sätze 1 bis 19 zusammengefasst:
Satz 1: Vorrichtung zur Minderung des Gehalts von NOₓ und N₂O in Gasen umfassend: A) einen Behälter (1) und darin angeordnet B) zwei hintereinander geschaltete Reaktionsstufen für die Entfernung von NOₓ (DeNO_{X}-Stufe) durch Reduktion von NOₓ mit einem Stickstoff enthaltenden Reduktionsmittel und dazu nachgeschaltet für die Entfernung von N₂O durch katalytische Zersetzung von N₂O in N₂ und O₂ (DeN₂O-Stufe), welche jeweils ein oder mehrere Katalysatorbetten (7, 8) aufweisen und welche von dem zu reinigenden Gas durchströmt werden, wobei C) mindestens ein Katalysatorbett der DeNOₓ-Stufe (7) einen Katalysator für die Reduktion von NOₓ mit Stickstoff enthaltenden Reduktionsmitteln enthält, welcher mit Übergangsmetallen, einschließlich der Lanthaniden, dotierte Zeolithe enthält, D) mindestens ein Katalysatorbett der DeN₂O-Stufe (8) einen Katalysator für die Zersetzung von N₂O in N₂ und O₂ enthält, der eine oder mehrere katalytische aktive Verbindungen von Elementen ausgewählt aus den Gruppen 5 bis 11 des Periodensystems der Elemente enthält, ausgenommen mit Eisen dotierte Zeolithe, und E) vor der DeNOₓ-Stufe (7) eine Vorrichtung zum Einbringen eines Stickstoff enthaltenden Reduktionsmittels in den Strom des NOₓ und N₂O enthaltenden Gases vorgesehen ist.

Satz 2: Vorrichtung nach Satz 1, dadurch gekennzeichnet, dass ein Mischer vorgesehen ist, durch welchen das NOₓ und N₂O enthaltende Gas sowie das Reduktionsmittel geführt werden und nach Durchmischen in die DeNOₓ-Stufe geleitet werden, wobei es sich vorzugsweise um einen statischen Mischer handelt, der vor dem Reaktor oder im Einlass in den Reaktor oder unmittelbar vor der DeNOₓ-Stufe angebracht ist.

Satz 3: Vorrichtung nach Satz 1, dadurch gekennzeichnet, dass Messstellen F) für den Fluss oder für die Menge des Gases und/oder Messstellen G) für die Bestimmung der Konzentration an NOₓ oder einer seiner Einzelkomponenten in dem Gas vorgesehen sind, wobei eine Messstelle F) bevorzugt vor der DeNOₓ-Stufe angebracht ist und eine Messstelle G) sich entweder vor der DeNOₓ-Stufe, nach der DeNOₓ-Stufe und vor der DeN₂O-Stufe oder nach der DeN₂O-Stufe befindet.

Satz 4: Vorrichtung nach Satz 3, dadurch gekennzeichnet, dass eine Messstelle G) nach der DeN₂O-Stufe oder besonders bevorzugt vor der DeNOₓ-Stufe in der Zuleitung für das Stickoxide enthaltende und zu reinigende Gas angebracht ist.

Satz 5: Vorrichtung nach Satz 3, dadurch gekennzeichnet, dass Messstellen F) und G) zur Ermittlung der Menge des eingespeisten Reduktionsmittels über eine Steuer- oder Regeleinheit H) mit einer Stellvorrichtung I) gekoppelt sind, mit welcher eine Änderung der Einspeisung der Menge des Reduktionsmittels bewirkt werden kann, vorzugsweise mit einem steuer- oder regelbaren Ventil, mit welchem der Fluss oder die Menge des die Vorrichtung E) durchströmenden Reduktionsmittels eingestellt werden kann.

Satz 6: Vorrichtung nach Satz 1, dadurch gekennzeichnet, dass mindestens ein Katalysatorbett einer Reaktionsstufe, vorzugsweise mindestens ein Katalysatorbett beider Reaktionsstufen so ausgestaltet oder angeordnet ist, dass es von dem zu reinigenden Gas lateral, insbesondere radial durchströmt wird, wobei vorzugsweise das radial durchströmte Katalysatorbett einer oder insbesondere bevorzugt beider Reaktionsstufen in Form eines Hohlzylinders vorliegt.

Satz 7: Vorrichtung nach Satz 6, dadurch gekennzeichnet, dass die radial durchströmten Katalysatorbetten beider Reaktionsstufen in Form von Hohlzylindern vorliegen, welche konzentrisch ineinander gestellt sind, wobei vorzugsweise der äußere Hohlzylinder Katalysator für die NO_{X}-Reduktion enthält, dessen Partikel oder Formkörper einen Äquivalenzdurchmesser von 2 bis 5 mm aufweisen und der der innere Hohlzylinder Katalysator für die N₂O-Zersetzung enthält, dessen Partikel oder Formkörper einen Äquivalenzdurchmesser von 1 bis 4 mm aufweisen.

Satz 8: Vorrichtung nach Satz 1, dadurch gekennzeichnet, dass in der DeNOₓ-Stufe Katalysatoren enthalten sind, die mit Co, Cu und/oder Fe dotierte Zeolithe enthalten, insbesondere mit Fe dotierte Zeolithe.

Satz 9: Vorrichtung nach Satz 1, dadurch gekennzeichnet, dass in der DeN₂O-Stufe Katalysatoren enthalten sind, die eine oder mehrere katalytische aktive Verbindungen von Elementen ausgewählt aus den Gruppen 9 bis 11 des Periodensystems der Elemente enthalten, bevorzugt Verbindungen der Elemente Co, Pt, Pd, Ir, Rh, Ni und/oder Cu, besonders bevorzugt Co, Rh, Ni und/oder Cu und insbesondere Co oder Rh.

Satz 10: Vorrichtung nach Satz 9, dadurch gekennzeichnet, dass die katalytisch aktiven Verbindungen in den DeN₂O-Katalysatoren in reiner Form enthalten sind oder auf geeigneten Trägermaterialien aufgebracht sind oder mit solchen vermengt sind, wobei als Trägermaterialien insbesondere refraktäre Oxide, vorzugsweise SiO₂,TiO₂, ZrO₂, Al₂O₃ oder Gemische von zwei oder mehreren davon eingesetzt werden oder Materialien, die selbst eine gewisse katalytische Aktivität zur N₂O-Zersetzung aufweisen, insbesondere MgO, Zeolithe, Hydrotalcite oder Gemische von zwei oder mehreren davon.

Satz 11: Vorrichtung nach Satz 9, dadurch gekennzeichnet, dass die DeN₂O-Katalysatoren keine oder im Wesentlichen keine Zeolithe enthalten.

Satz 12: Vorrichtung nach Satz 9, dadurch gekennzeichnet, dass in der DeN₂O-Stufe Rhenthaltende Katalysatoren enthalten sind, die auf ZrO₂, TiO₂ oder Hydrotalciten geträgert sind oder mit diesen Trägermaterialien vermengt sind, oder dass in der DeN₂O-Stufe Coenthaltende Katalysatoren enthalten sind, die auf Zeolithen, Hydrotalciten oder auf Magnesiumoxid geträgert sind oder mit diesen Trägermaterialien vermengt sind.

Satz 13: Verfahren zur Minderung des Gehalts von NOₓ und N₂O in Gasen umfassend die Maßnahmen: a) Zugabe von Stickstoff enthaltendem Reduktionsmittel zu einem N₂O und NOₓ enthaltenden Gasstrom zur Reduktion des NOₓ b) Leiten des N₂O, NOₓ und Reduktionsmittel enthaltenden Gasstromes durch mindestens ein Katalysatorbett einer DeNOₓ-Stufe (7), das einen Katalysator für die Reduktion des NOₓ durch das Reduktionsmittel enthält, welcher mit Übergangsmetallen, einschließlich der Lanthaniden, dotierte Zeolithe enthält, und c) Leiten des aus der DeNOₓ-Stufe austretenden Gasstromes durch mindestens ein Katalysatorbett einer DeN₂O-Stufe (8), das einen Katalysator für die Zersetzung des N₂O in N₂ und O₂ enthält, der ausgewählt wird aus der Gruppe der Katalysatoren enthaltend eine oder mehrere katalytische aktive Verbindungen von Elementen ausgewählt aus den Gruppen 5 bis 11 des Periodensystems der Elemente mit Ausnahme der mit Eisen dotierten Zeolithe.

Satz 14: Verfahren nach Satz 13, dadurch gekennzeichnet, dass die Menge des Reduktionsmittels so ausgewählt wird, dass dieses vollständig oder nahezu vollständig in der DeNOₓ-Stufe umgesetzt wird, so dass kein Schlupf des Reduktionsmittels aus der DeNOₓ-Stufe in die DeN₂O-Stufe oder ein Schlupf von kleiner als 25 ppmv resultiert.

Satz 15: Verfahren nach Satz 13, dadurch gekennzeichnet, dass das Reduktionsmittel für NOₓ Ammoniak ist, das vorzugsweise in einer solchen Menge zugegeben wird, dass, bezogen auf die Komponenten NH₃ und NOₓ am Eintritt der DeNOₓ-Stufe, ein molares NH₃/NOₓ-Verhältnis von 0,8 bis 3, vorzugsweise von 1 bis 2,5, besonders bevorzugt von 1,2 bis 2 und insbesondere von 1,3 bis 1,8 resultiert.

Satz 16: Verfahren nach Satz 13, dadurch gekennzeichnet, dass das Stickstoff enthaltende Reduktionsmittel zu dem N₂O und NOₓ enthaltenden Gasstrom in einer solchen Menge zugegeben wird, so dass der Abbaugrad an NOₓ, bezogen auf die Eintrittskonzentration an NOₓ, mehr als 70%, bevorzugt mehr als 80%, besonders bevorzugt mehr als 90%, insbesondere mehr als 95% beträgt und/oder dass in der DeN₂O-Stufe Raumgeschwindigkeit, Temperatur und Druck so gewählt werden, dass das Gas am Ausgang der DeN₂O-Stufe einen N₂O-Gehalt von kleiner als 100 ppmv, vorzugsweise kleiner als 50 ppmv, besonders bevorzugt kleiner als 30 ppmv und ganz besonders bevorzugt von kleiner als 15 ppmv aufweist.

Satz 17: Verfahren nach Satz 13, dadurch gekennzeichnet, dass die Zugabe an Reduktionsmittel für NOₓ geregelt wird, indem über eine Messstelle G) am Austritt der DeN₂O-Stufe der NOₓ-Gehalt gemessen wird und über eine Regeleinheit H) eine Stellvorrichtung I) zur Dosierung des Reduktionsmittels so gesteuert wird, dass sich am Austritt der DeN₂O-Stufe der gewünschte NOₓ-Gehalt einstellt und/oder dass die Zugabe an Reduktionsmittel für NOₓ gesteuert wird, indem der NOₓ-Gehalt und der Fluss oder die Menge des Gases vor Eintritt in die DeNOₓ-Stufe gemessen und aus diesen Größen über eine Steuereinheit H) unter Vorgabe eines geeigneten Verhältnisses der Mengen von Reduktionsmittel und NOₓ die benötige Menge an Reduktionsmittel ermittelt und die Stellvorrichtung I) entsprechend gestellt wird.

Satz 18: Verfahren nach Satz 13, dadurch gekennzeichnet, dass die Temperatur in der DeNOₓ-Stufe und in der DeN₂O-Stufe zwischen 300 und 600°C, vorzugsweise zwischen 350 und 550°C, und besonders bevorzugt zwischen 400 und 550°C beträgt und dass die Temperatur in der DeN₂O-Stufe sich nicht mehr als um 50°C, vorzugsweise nicht mehr als um 20°C von der in der DeNOₓ-Stufe herrschenden Temperatur unterscheidet und/oder dass der Druck in der DeNOₓ-Stufe und in der DeN₂O-Stufe im Bereich von 1 bis 50 bara, vorzugsweise von 1 bis 25 bara, besonders bevorzugt von 4 bis 15 bara liegt und/oder dass das Verfahren in der DeNOₓ-Stufe bei Raumgeschwindigkeiten von 5.000 bis 200.000 h⁻¹, bevorzugt von 10.000 bis 100.000 h⁻¹, und besonders bevorzugt von 20.000 bis 60.000 h⁻¹, durchgeführt wird.

Satz 19: Verfahren nach Satz 13, dadurch gekennzeichnet, dass das Verfahren in der DeN₂O-Stufe bei Raumgeschwindigkeiten von 2.000 bis 50.000 h⁻¹, bevorzugt von 2.500 bis 25.000 h⁻¹, und besonders bevorzugt von 3.000 bis 20.000 h⁻¹, durchgeführt wird.

## Patentansprüche

1. Vorrichtung zur Minderung des Gehalts von NOₓ und N₂O in Gasen umfassend:
A) einen Behälter (1) und darin angeordnet
B) zwei hintereinander geschaltete Reaktionsstufen für die Entfernung von NOₓ (DeNO_{X}-Stufe) durch Reduktion von NOₓ mit einem Stickstoff enthaltenden Reduktionsmittel und dazu nachgeschaltet für die Entfernung von N₂O durch katalytische Zersetzung von N₂O in N₂ und O₂ (DeN₂O-Stufe), welche jeweils ein oder mehrere Katalysatorbetten (7, 8) aufweisen und welche von dem zu reinigenden Gas durchströmt werden, wobei
C) mindestens ein Katalysatorbett der DeNOₓ-Stufe (7) einen Katalysator für die Reduktion von NOₓ mit Stickstoff enthaltenden Reduktionsmitteln enthält, welcher mit Übergangsmetallen, einschließlich der Lanthaniden, dotierte Zeolithe enthält,
D) mindestens ein Katalysatorbett der DeN₂O-Stufe (8) einen Katalysator für die Zersetzung von N₂O in N₂ und O₂ enthält, der eine oder mehrere katalytische aktive Verbindungen von Elementen ausgewählt aus den Gruppen 5 bis 11 des Periodensystems der Elemente enthält, ausgenommen mit Eisen dotierte Zeolithe, und
E) vor der DeNOₓ-Stufe (7) eine Vorrichtung zum Einbringen eines Stickstoff enthaltenden Reduktionsmittels in den Strom des NOₓ und N₂O enthaltenden Gases vorgesehen ist.

2. Vorrichtung nach Anspruch 1, **dadurch gekennzeichnet, dass** in der DeNOₓ-Stufe Katalysatoren enthalten sind, welche im Temperaturbereich von 350 bis 600°C, insbesondere zwischen 400 und 600°C, folgende Eigenschaften aufweisen
a) eine hohe katalytische Aktivität und Selektivität zur chemischen Umsetzung von NOₓ mit Stickstoff enthaltenden Reduktionsmitteln zu N₂ und H₂O
b) eine signifikante katalytische Aktivität zur selektiven Oxidation von überstöchiometrisch dosiertem Reduktionsmittel mit O₂ und oder N₂O zu N₂ und H₂O
c) und möglichst eine signifikante Aktivität zur Zersetzung von N₂O in N₂ und O₂.

3. Vorrichtung nach Anspruch 1, **dadurch gekennzeichnet, dass** in der DeNOₓ-Stufe Katalysatoren enthalten sind, die mit Co, Cu und/oder Fe dotierte Zeolithe enthalten, insbesondere mit Fe dotierte Zeolithe.

4. Vorrichtung nach Anspruch 1, **dadurch gekennzeichnet, dass** in der DeN₂O-Stufe NOₓ-sensitive Katalysatoren für die Zersetzung von N₂O in N₂ und O₂ enthalten sind.

5. Vorrichtung nach Anspruch 1, **dadurch gekennzeichnet, dass**
- in der DeN₂O-Stufe Katalysatoren enthalten sind, die eine oder mehrere katalytische aktive Verbindungen von Elementen ausgewählt aus den Gruppen 9 bis 11 des Periodensystems der Elemente enthalten, bevorzugt Verbindungen der Elemente Co, Pt, Pd, Ir, Rh, Ni und/oder Cu, besonders bevorzugt Co, Rh, Ni und/oder Cu und insbesondere Co oder Rh; und/oder
- die DeN₂O-Katalysatoren keine oder im Wesentlichen keine Zeolithe enthalten.

6. Verfahren zur Minderung des Gehalts von NOₓ und N₂O in Gasen umfassend die Maßnahmen:
a) Zugabe von Stickstoff enthaltendem Reduktionsmittel zu einem N₂O und NOₓ enthaltenden Gasstrom zur Reduktion des NOₓ
b) Leiten des N₂O, NOₓ und Reduktionsmittel enthaltenden Gasstromes durch mindestens ein Katalysatorbett einer DeNOₓ-Stufe (7), das einen Katalysator für die Reduktion des NOₓ durch das Reduktionsmittel enthält, welcher mit Übergangsmetallen, einschließlich der Lanthaniden, dotierte Zeolithe enthält, und
c) Leiten des aus der DeNOₓ-Stufe austretenden Gasstromes durch mindestens ein Katalysatorbett einer DeN₂O-Stufe (8), das einen Katalysator für die Zersetzung des N₂O in N₂ und O₂ enthält, der ausgewählt wird aus der Gruppe der Katalysatoren enthaltend eine oder mehrere katalytische aktive Verbindungen von Elementen ausgewählt aus den Gruppen 5 bis 11 des Periodensystems der Elemente mit Ausnahme der mit Eisen dotierten Zeolithe.

7. Verfahren nach Anspruch 6, **dadurch gekennzeichnet, dass** in der DeNOₓ-Stufe Katalysatoren enthalten sind, die mit Co, Cu und/oder Fe dotierte Zeolithe enthalten, insbesondere mit Fe dotierte Zeolithe.

8. Verfahren nach Anspruch 6, **dadurch gekennzeichnet, dass** in der DeN₂O-Stufe NOₓ-sensitive Katalysatoren für die Zersetzung von N₂O in N₂ und O₂ enthalten sind.

9. Verfahren nach Anspruch 6, **dadurch gekennzeichnet, dass**
- in der DeN₂O-Stufe Katalysatoren enthalten sind, die eine oder mehrere katalytische aktive Verbindungen von Elementen ausgewählt aus den Gruppen 9 bis 11 des Periodensystems der Elemente enthalten, bevorzugt Verbindungen der Elemente Co, Pt, Pd, Ir, Rh, Ni und/oder Cu, besonders bevorzugt Co, Rh, Ni und/oder Cu und insbesondere Co oder Rh; und/oder
- die DeN₂O-Katalysatoren keine oder im Wesentlichen keine Zeolithe enthalten.

10. Verfahren nach Anspruch 6, **dadurch gekennzeichnet, dass** der Fluss oder die Menge des Gases im Gasstrom gemessen und/oder die Konzentration an NOₓ oder einer seiner Einzelkomponenten in dem Gasstrom entweder vor der DeNOₓ-Stufe oder nach der DeN₂O-Stufe oder nach der DeNOₓ-Stufe und vor der DeN₂O-Stufe bestimmt wird und aus dem Wert des Flusses oder der Menge des Gases und dem Wert der Konzentration an NOₓ oder einer seiner Einzelkomponenten die benötigte Menge an Reduktionsmittel für die DeNOₓ-Stufe ermittelt und bemessen wird.

11. Verfahren nach Anspruch 6, **dadurch gekennzeichnet, dass** die Menge des Reduktionsmittels so ausgewählt wird, dass dieses vollständig oder nahezu vollständig in der DeNOₓ-Stufe umgesetzt wird, so dass kein Schlupf des Reduktionsmittels aus der DeNOₓ-Stufe in die DeN₂O-Stufe oder ein Schlupf von kleiner als 25 ppmv resultiert.

12. Verfahren nach Anspruch 6, **dadurch gekennzeichnet, dass** das Reduktionsmittel für NOₓ Ammoniak ist, das vorzugsweise in einer solchen Menge zugegeben wird, dass, bezogen auf die Komponenten NH₃ und NOₓ am Eintritt der DeNOₓ-Stufe, ein molares NH₃/NOₓ-Verhältnis von 0,8 bis 3, vorzugsweise von 1 bis 2,5, besonders bevorzugt von 1,2 bis 2 und insbesondere von 1,3 bis 1,8 resultiert.

13. Verfahren nach Anspruch 6, **dadurch gekennzeichnet, dass** das Stickstoff enthaltende Reduktionsmittel zu dem N₂O und NOₓ enthaltenden Gasstrom in einer solchen Menge zugegeben wird, so dass der Abbaugrad an NOₓ, bezogen auf die Eintrittskonzentration an NOₓ, mehr als 70%, bevorzugt mehr als 80%, besonders bevorzugt mehr als 90%, insbesondere mehr als 95% beträgt und/oder dass in der DeN₂O-Stufe Raumgeschwindigkeit, Temperatur und Druck so gewählt werden, dass das Gas am Ausgang der DeN₂O-Stufe einen N₂O-Gehalt von kleiner als 100 ppmv, vorzugsweise kleiner als 50 ppmv, besonders bevorzugt kleiner als 30 ppmv und ganz besonders bevorzugt von kleiner als 15 ppmv aufweist.

14. Verfahren nach Anspruch 6, **dadurch gekennzeichnet, dass** die Zugabe an Reduktionsmittel für NOₓ geregelt wird, indem über eine Messstelle G) am Austritt der DeN₂O-Stufe der NOₓ-Gehalt gemessen wird und über eine Regeleinheit H) eine Stellvorrichtung I) zur Dosierung des Reduktionsmittels so gesteuert wird, dass sich am Austritt der DeN₂O-Stufe der gewünschte NOₓ-Gehalt einstellt und/oder dass die Zugabe an Reduktionsmittel für NOₓ gesteuert wird, indem der NOₓ-Gehalt und der Fluss oder die Menge des Gases vor Eintritt in die DeNOₓ-Stufe gemessen und aus diesen Größen über eine Steuereinheit H) unter Vorgabe eines geeigneten Verhältnisses der Mengen von Reduktionsmittel und NOₓ die benötige Menge an Reduktionsmittel ermittelt und die Stellvorrichtung I) entsprechend gestellt wird.

15. Verfahren nach Anspruch 6, **dadurch gekennzeichnet, dass** die Temperatur in der DeNOₓ-Stufe und in der DeN₂O-Stufe zwischen 300 und 600°C, vorzugsweise zwischen 350 und 550°C, und besonders bevorzugt zwischen 400 und 550°C beträgt und dass die Temperatur in der DeN₂O-Stufe sich nicht mehr als um 50°C, vorzugsweise nicht mehr als um 20°C von der in der DeNOₓ-Stufe herrschenden Temperatur unterscheidet und/oder dass der Druck in der DeNOₓ-Stufe und in der DeN₂O-Stufe im Bereich von 1 bis 50 bara, vorzugsweise von 1 bis 25 bara, besonders bevorzugt von 4 bis 15 bara liegt und/oder dass das Verfahren in der DeNOₓ-Stufe bei Raumgeschwindigkeiten von 5.000 bis 200.000 h⁻¹, bevorzugt von 10.000 bis 100.000 h⁻¹, und besonders bevorzugt von 20.000 bis 60.000 h⁻¹, durchgeführt wird.
